# EUROPÄISCHE PATENTSCHRIFT

(11) **EP 4 523 980 B1**
(45) Veröffentlichungstag und Bekanntmachung des Hinweises auf die Patenterteilung: **01.04.2026**
(21) Anmeldenummer: 24200565.0
(22) Anmeldetag: 20.08.2020
(51) Int. Cl.: B60T 1/10, B60T 7/04, B60T 8/17, B60T 13/74

(54) **FAHRDYNAMIKSYSTEM**
VEHICLE DYNAMICS SYSTEM
SYSTÈME DE DYNAMIQUE DE CONDUITE

(30) Priorität: 30.08.2019 DE 102019123343
(43) Veröffentlichungstag der Anmeldung: 19.03.2025
(62) Teilanmeldung aus: 20760807.6
(73) Patentinhaber: IPGATE AG, 8808 Pfäffikon SZ (CH)
(72) Erfinder: LEIBER, Thomas, 22203 Rogoznica (HR)
(74) Vertreter: Meissner Bolte Partnerschaft mbB

(56) Entgegenhaltungen:
- EP-B1- 2 144 794
- EP-B1- 3 328 695
- WO-A1-2019/002475
- DE-A1- 102009 030 816
- DE-A1- 102011 084 391
- DE-A1- 102014 221 036
- DE-A1- 102017 113 563
- DE-T2- 60 303 264
- US-A- 5 318 355

## Beschreibung

Die vorliegende Erfindung betrifft ein Fahrdynamiksystem, ein fahrerloses Fahrzeug, ein Rennsportfahrzeug, ein Elektrofahrzeug und ein Verfahren zum Betrieb eines Torque-Vektoring.

### Stand der Technik

Aus WO2018215397A1 ist ein Bremssystem zur Rekuperation von kinetischer Energie über den elektrischen Antriebsmotor an einer ersten Achse bekannt, wobei die zweite Achse mit der Betätigungseinheit verbunden ist. Zudem ist aus WO2018215397A1 ein Rekuperationsbremsenmanagement mit Elektromotor und Bremssystem an einer Achse bekannt.

PPC-Druckregelungen mit elektrisch angetriebenen Kolben-Zylinder-Systemen unter Verwendung von Druckvolumenkennlinie, Strom und Kolbenposition sind z.B. aus EP 1874602 B1, DE 102005055751 B3, DE 102005018649 B3, DE 102005063659 B3 und EP 1907253 B1 und die Multiplex-Druckregelung aus EP 1874602 B1 und DE 102005055751 B3 bekannt.

So offenbart DE 102005055751 B3 ein Bremssystem, bei dem die Druckänderung in den Radbremsen unter Verwendung einer Druckvolumenkennlinie erfolgt, wobei die Kolbensteuerung mittels Motorstrommessung und/oder Positionsbestimmung des Kolbens erfolgt (sog. PPC-Drucksteuerung), wobei jeder Radbremse ein Schaltventil zugeordnet ist und während der Druckänderung das der Radbremse zugeordnete Schaltventil dauerhaft geöffnet ist. Zum Druckhalten in der jeweiligen Radbremse wird das jeweilige Schaltventil geschlossen.

Die DE 102005018649 B3 offenbart ferner, dass ein Kennfeld zur Druckregelung verwendet wird, welches im Betrieb adaptiert wird. Die Adaptierung hat den Zweck, Änderungen im Betrieb, wie z.B. Veränderungen der Druck-Volumen-Kennlinie, durch Lufteinschlüsse im Hydraulikmedium der Bremsanlage zu erfassen.

Die DE 102005063659 B3 offenbart eine_Druckregelung über Stromregelung und Verstärkerkennlinie. Bei der Stromregelung wird der lineare Zusammenhang zwischen Motorstrom (Phasenstrom) und Motordrehmoment, die sog. Drehmomentkonstante in der Druckregelung und bzw. Diagnose genutzt, wenn kein Druckgeber als Messsignal zur Verfügung steht.

Die EP1907253B1 offenbart ein Bremssystem mit einer Betätigungseinrichtung, insbesondere in Form eines Bremspedals, wobei das Bremssystem eine Steuer- und Regeleinrichtung aufweist, die anhand der Bewegung und/oder Position der Betätigungseinrichtung eine elektromotorische Antriebsvorrichtung steuert, wobei die Antriebsvorrichtung einen Kolben eines Kolben-Zylinder-Systems über eine mit dem Kolben fest gekoppelte, nicht-hydraulische Getriebevorrichtung verstellt, so dass sich im Arbeitsraum des Zylinders ein Druck einstellt, wobei der Arbeitsraum über eine Druckleitung mit einer Radbremse in Verbindung ist. In der Druckleitung zu jeder Radbremse ist ein von der Steuer- und Regeleinrichtung gesteuertes Ventil angeordnet ist, wobei bei Ausfall der Antriebsvorrichtung die Betätigungseinrichtung den Kolben oder die Antriebsvorrichtung verstellt. Die elektromotorische Antriebseinrichtung verstellt dabei den Kolben über einen Rotor und einen als Untersetzungsgetriebe wirkenden Spindelantrieb, so dass der Kolben die erforderliche Druckänderung für die Bremskraftverstärkung und das Antiblockiersystem (ABS) erzeugt. Das Ventil schließt dabei nach Erreichen des erforderlichen Bremsdrucks im Bremszylinder und ist auch im ABS-Betrieb sowohl zur Einstellung eines neuen niedrigeren als auch neuen höheren Bremsdrucks geöffnet.

Aus der DE 10 2009 030 816 A1 ist eine Vorrichtung und ein Verfahren zur Regelung einer Fahrdynamik eines Fahrzeugs bekannt, welches das Folgende aufweist: eine Vorderachse mit zwei Vorderrädern mit jeweiligen Reibungsbremsen; mindestens eine Hinterachse mit zwei Hinterrädern mit jeweiligen Radantrieben, wobei beide Radantriebe das Fahrzeug antreiben oder regenerativ bremsen können; ein Steuergerät der Fahrdynamik, das die Fahrdynamik des Fahrzeugs durch Ansteuerung der Räder regelt; und mindestens eine Batterie zur Versorgung und zur Aufnahme von regenerativer Energie der Radantriebe. Die Räder sind auf einen ersten Regelkreis und einen zweiten Regelkreis aufgeteilt sind, wobei der erste und der zweite Regelkreis jeweils ein rechtes und ein linkes Rad umfassen.

### Aufgabe der Erfindung

Aufgabe der vorliegenden Erfindung ist es, ein optimiertes Fahrdynamiksystem mit einer zentralen Regelung eines Fahrzeugs für Bremseingriffe bereitzustellen, das gemeinsam mit Rekuperation von kinetischer Energie über Elektromotoren in Elektro-Achsantrieben einsetzbar ist.

Diese Aufgabe wird vorteilhaft mit einem Fahrdynamiksystem mit den Merkmalen des Anspruchs 1 gelöst. Vorteilhafte Weiterbildungen des Fahrdynamiksystems nach Anspruch 1 ergeben sich durch die Merkmale der Unteransprüche. Ferner wird die Aufgabe durch ein fahrerloses Fahrzeug mit den Merkmalen des Anspruchs 12, ein Rennsportfahrzeug mit den Merkmalen des Anspruchs 13, ein Elektrofahrzeug mit den Merkmalen des Anspruchs 14 und ein Verfahren zum betrieb eines Torque-Vektoring mit den Merkmalen des Anspruchs 15 gelöst.

Das erfindungsgemäße Fahrdynamiksystem zeichnet sich vorteilhaft dadurch aus, dass es ein zentrales Bremsmanagement mit einer zentralen Steuer- und Regeleinrichtung (M-ECU_{BM}) sowie Slave Steuer- und Regeleinrichtungen (E-ECUᵢ) für die elektrische Achsantriebsmotoren (TM1, TM2) und elektrisch angetriebene Druckversorgungseinrichtungen (DV1, DV2) aufweist, so dass an mehreren Achsen oder mehreren Radbremsen einer Achse Sollbremsmomente für den bzw. die elektrischen Traktionsmotor(-en) und für die hydraulischen Radbremsen und damit für die Druckversorgungseinrichtung vorgebbar sind. Das zentrale Bremsmanagement kann dabei in einer von der Druckversorgungseinrichtung getrennten Steuer- und Regeleinrichtung (M-ECU_{BM}) angeordnet sein oder aber die Steuer- und Regeleinheit (S-ECU_{DV1}) der Druckversorgungseinrichtung beinhaltet bzw. bildet das zentrale Bremsmanagement. Das zentrale Bremsenmanagement kann ein Software-Modul einer zentralen Fahrdynamiksteuerung nach gemäß Domänenstruktur moderner elektrisch angetriebener Fahrzeuge sein.

Das erfindungsgemäße Fahrdynamiksystem kann bremskreisindividuell die Bremsdrücke regeln und auch zusätzlich mit einem elektrischen Antriebsmotor, welcher im weiteren auch als elektrischer Traktionsmotor bezeichnet wird, oder mehreren elektrischen Antriebsmotoren, welcher bzw. welche an der Vorderachse und/oder Hinterachse eines Kraftfahrzeuges angeordnet ist bzw. sind, ein Verzögerungsmoment erzeugen und dabei gleichzeitig kinetische Energie über Bremsen mittels des oder der Traktionsmotoren in elektrische Energie umzuwandeln und somit rückgewinnen (Rekuperation).

Das erfindungsgemäße Fahrdynamiksystem kann dabei vorteilhaft derart ausgelegt sein, dass in einer Ausführungsform A mit dem mindestens einem Traktionsmotor und der Druckversorgungseinrichtung im Zusammenspiel für jede Achse achsindividuell eine Bremsverzögerung oder in einer Ausführungsform B im Zusammenspiel mit zwei Radbremsen einer Achse radindividuell eine Bremsverzögerung eingeregelt werden kann.

In der **Ausführungsform A** (2-Kanal-Bremskraftregelung) wird eine achsindividuelle Regelung im Sinne der elektrischen Bremskraftverteilung (EBV) bzw. vereinfachten achsweisen ABS für 4-Räder Fahrzeuge oder ABS-Funktion für 2-Räder-Fahrzeuge mit der Rekuperation mittels mindestens einem Elektromotor kombiniert.

In der **Ausführungsform B** (2x2-Kanal-Bremskraftregelung) wird die radindividuelle Verzögerung einer Achse mit der Rekuperation von einem elektrischen Antriebsmotor der Achse kombiniert, wobei zusätzlich zur Ausführungsform A Torque Vektoring, Lenkung, ABS/ESP-Funktionen in der Achse implementiert werden können. So kann zusätzlich auch eine elektrische Servolenkung an der Achse und Ansteuerung der Lenkung über das zentrale Management mit integriert werden und die Lenkungsfunktion der Bremsanlage durch Giermomentregelung in Ausführungsform B wird als Redundanz zur elektrischen Servolenkung oder zur Verbesserung der Agilität genutzt. So kann bei Ausfall der elektrischen Servolenkung im Betrieb die Fahrstabilität durch die Bremse aufrechterhalten werden. Zudem kann sowohl über die Servolenkung als auch über die Bremsanlage in die Fahrdynamik zur Verbesserung der Agilität, insbesondere bei Fahrzeugen mit sehr hoher Leistung bzw. Agilitätsanforderungen eingegriffen werden, z.B. Lenkung an der Vorderachse über die elektrische Servolenkung und gleichzeitig Torque-Vektoring-Eingriffen an der Hinterachse eines Fahrzeuges. In der zweiten Ausführungsform B können eine oder mehrere Antriebsmotoren einer Achse, z.B. Achsantrieb mittels einem oder zweier Motoren, Lenkungssysteme an Vorderachse und optional auch Hinterachse, Radnabenelektromotoren an jedem Rad, vorgesehen sein, sowie gleiche oder unterschiedliche Lösungen an unterschiedlichen Achsen kombiniert werden. Vorzugsweise ist je ein 2-Kanal-Regelmodul für jede Achse vorgesehen für eine Schwarz-Weiss-Bremskraftaufteilung mit den Vorteilen von kurzen Hydraulikleitungen zwischen Druckversorgung und Bremse. Diese Ausgestaltungsform ist prädestiniert für E-Achsen. Sofern eine diagonale Bremskraftverteilung zwingend ist, können auch von jedem 2-Kanal-Regelmodul jeweils Radbremsen der Vorderachse und Hinterachse in einer typischen diagonalen Bremskraftverteilung vorgesehen werden mit dem Nachteil, dass Hydraulikleitungen durch das Fahrzeug geführt werden müssen.

In beiden Ausführungsformen wird mittels der Druckversorgungseinrichtung der Druck im geschlossenen Bremskreis im PPC-Verfahren eingestellt bzw. eingeregelt und im Regelbetrieb, d.h. unterschiedliche Raddrücke in den Bremskreisen, gemäß Offenbarung der EP1907253B1, der Druck in den Bremskreisen simultan, zeitversetzt, insbesondere im Multiplexverfahren oder teilsimultan, d. h. zeitlich überlappend eingestellt bzw. eingeregelt. Hierzu weist das erfindungsgemäße Bremssystem zwei Verbindungsleitungen auf, welche die Druckversorgung mit den beiden Bremskreisen verbindet, wobei in jeder Verbindungsleitung ein Schaltventil zum wahlweisen Verschließen und Öffnen der jeweiligen Verbindungsleitung angeordnet ist. Aus Sicherheitsgründen können die Schaltventile bevorzugt derart ausgeführt sein, dass der jeweilige Hydraulikausgang am Kugelventilsitz der Schaltventile mit der Radbremse über eine hydraulische Leitung verbunden wird, damit im Fehlerfall der Druck in der Radbremse die Magnetventile selbstständig öffnet und Bremsdruck im Fehlerfall immer sicher abgebaut werden kann. Das Schaltventil kann für die Dauer der Druckänderung dem zugehörigen Bremskreis dauerhaft geöffnet sein, wobei dann die Druckänderung mit der Druckversorgung der Druckversorgungseinrichtung vorgenommen wird.

Die Druckversorgung kann auch zusätzlich oder alternativ zur Multiplexsteuerung derart einen Druck bereitstellen, in dem das PPC-Verfahren mit einer PWM-Steuerung bzw. Stromregelung der Schaltventile kombiniert wird. Dadurch wird der Druck in einem Bremskreis durch Vordrucksteuerung über die Druckversorgung im PPC-Verfahren bei offenen Schaltventil geregelt bzw. gesteuert und in dem anderen Bremskreis wird das Schaltventil pulsweitemoduliert oder stromgeregelt angesteuert. Dadurch ist es auch möglich, dass simultan bzw. teilsimultan in beiden Bremskreisen unterschiedliche Drücke eingestellt bzw. eingeregelt werden können und somit zeitgleich unterschiedliche Druckänderungsverläufe realisiert werden. Die Druckverlaufsregelung ist zur feindosierten EBV-Regelung bzw. achsweisen ABS-Regelung sowie zur genauen Abstimmung der Bremsmomente, welche durch die Druckversorgung erzeugt werden, auf den Bremsmomentverlauf von Elektromotoren dienlich.

Das Multiplexverfahren und/oder das PWM-Ansteuerungsverfahren der Magnetventile bietet alle Freiheitsgrade einer hochpräzisen bremskreisindividuellen Regelung bei gleichzeitig hoher Fehlersicherheit eines geschlossenen Bremskreises. So werden vorteilhaft schlafende Fehler vermieden und es ist eine gute, einfache und sichere Diagnose von Leckagen möglich. Um das PWM- bzw. Stromregelverfahren einzusetzen, müssen die Magnetventile als stromlos offene Schaltventile ausgeführt werden, so dass über Spannungsregelung der Spulen der Magnetventile ein variabler Öffnungsquerschnitt eingestellt werden kann.

Mittels der Druckversorgungseinrichtung können auch vereinfachte Regelfunktionen, d.h. vereinfachter achsweiser ABS-Regelbetrieb (Ausführungsform A) realisiert werden, bei der die Raddrücke achsindividuell, aber nicht radindividuell geregelt werden. Diese Vereinfachung kombiniert mit der hochpräzisen PPC-Druckregelung ist für diverse Anwendungen, wie z.B. Zweiräder und Rennfahrzeuge mit zwei Achsen, wo ein ABS/ESP-Regelung nicht zugelassen ist, ausreichend. Mit der achsindividuelle Bremskraftregelung (EBV-Funktion) können stärkere Verzögerungen als bei einer reinen Select-Low-Regelung an allen Rädern erzielt werden, da die Bremskraftverteilung entsprechend der Achslastverteilung an Vorder- und Hinterachse aufgeteilt werden kann, d.h. an der Hinterachse wird bei starken Verzögerungen ein niedriger Druck eingestellt als an der Vorderachse. Auch bei Straßenfahrzeugen führt die achsindividuelle Regelung lediglich zu Einschränkungen lediglich beim µ-Spit Betrieb, d.h. wenn die Räder auf der einen rechten/linken Seite des Fahrzeuges auf Eis stehen und die Räder der linken/rechten Seite auf Asphalt stehen. In diesem Fall wird der Druck derart eingestellt, dass keine der Räder blockieren. Dies führt zu längeren Bremswegen, dennoch ist das Fahrzeug noch lenkbar.

Mittels der Ausführungsform B des erfindungsgemäßen Fahrdynamiksystems in einer Achse kann eine radindividuelle Regelung durchgeführt werden, wodurch das System dann sämtliche Freiheitsgrade hat. Die Ausführungsform B ermöglicht radindividuelles ABS/ESP sowie die Anti-Schlupf-Regelfunktion (ASR), Torque Vektoring und Lenkungseingriffe. Die zweite Ausführungsform B bietet alle Freiheitsgrade für einen Achssteller und kann in modernen Elektro-Achsmodulen mit einem starken elektrischen Traktionsmotor eingesetzt werden und kann zudem mit weiteren Ventilschaltung einfach erweitert werden, um weitere hydraulische Stellglieder in der E-Achse (z.B. Betätigung von Kupplungen von Doppelkupplungssystemen eines der 2-Gang-Getriebes, das in modernen E-Fahrzeuge bevorzugt eingesetzt und Bestandteil einer Fahrzeugachse ist) mit Druck versorgen. Da Gangschaltung und Bremsung nicht gleichzeitig erfolgen, führt der MUX-Betrieb von Bremse und Kupplung zu keinen Einschränkungen in der Funktion.

Es ist ebenso möglich, dass das erfindungsgemäße Fahrdynamiksystem der ersten Ausführungsform A mit einer bereits bekannten Standard ABS/ESP-Einheit, welche zwischen die Druckversorgungseinrichtung und die Bremskreise zwischengeschaltet wird, ausgebildet wird. Die ABS/ESP-Funktion übernimmt dabei die radindividuelle Regelung und das erfindungsgemäße Bremssystem kann bei Ausfall der ABS/ESP-Einheit immer noch die achsindividuelle Bremsdruckregelung /achsweise ABS-Funktion) mit Rekuperation ermöglichen, womit die Redundanzanforderungen für diverse Stufen des autonomen Fahrbetriebs (AD) Stufe 3 und Stufe 4 (siehe ATZ Artikel Bremskraftverstärker für das autonome Fahren, Ausgabe 3/19) erfüllt werden können. Zudem können beide Bremsmodule separat appliziert und von unterschiedlichen Lieferanten bezogen werden, wobei das zentrale Bremsenmanagement (M-ECU_{BM}) vorzugsweise im erfindungsgemäßen Bremssystem der ersten Ausführungsform A stattfindet.

Nachfolgend werden besondere Vorteile des erfindungsgemäßen Fahrdynamiksystems einzeln näher erläutert:
- vorteilhafte Möglichkeit der Einbindung des Bremssystems und deren Bremsenregelung in eine Domänenstruktur einer zentralen Fahrdynamikregelung mit der Möglichkeit der Optimierung der gesamten Fahrdynamik und Einbindung mehrerer Stellaktuatoren für Bremse, Lenkung und Dämpfung sowie Einbindung der elektrischen Traktionsmotoren;
- Zentralsteuerung vom mindestens einem elektrischen Antriebsmotor und hydraulischer Bremse kann vorteilhaft zur Optimierung des Verschleißes von mechanischen Teilen genutzt werden. So kann der Verschleiß des Bremssattels sowie die Erwärmung von Bremssatteln durch Aufteilung der Bremsenergie auf die mechanisch/hydraulische Bremse und den mindestens einen elektrischen Antriebsmotor bzw. Traktionsmotor, welcher aufgrund typischer Wasserkühlung Wärme sehr gut abführen kann, reduziert werden. Damit können Fadingeffekte reduziert werden und das hydraulische Bremssystem kann auf geringere Drücke ausgelegt werden, wodurch die Druckversorgung downgesized werden kann. z.B. kann der Antriebsmotor für die Druckversorgung auf ein geringes Drehmoment ausgelegt werden. Zudem können die Lastzyklen mit maximaler Belastung reduziert werden und die mechanischen Komponenten, wie z.B. Spindeltrieb, Kolbendichtungen, können einfacher ausgeführt werden, da eine geringe hydraulische Belastung auf die Druckversorgung wirkt. Auch ist es denkbar, ein einfaches Getriebe, wie z.B. eine Trapezspindel aus Kunststoff, oder ein Kunststoffgehäuse für die Druckversorgung einzusetzen und/oder als Druckversorgung eine kostengünstige Rotationspumpe einzusetzen. Dies erfordert jedoch einen sehr starken elektrischen Antriebsmotor mit einer Leistung von größer 100 kW. Dieses oben beschriebene Downsizingpotential kann jedoch durch anderer Regelanforderungen, z.B. lang andauerndem Anti-Schlupf-Regelbetrieb (ASR) bei Fahrbahnen mit unterschiedlichen Reibwerten zunichte gemacht werden, da hier ein dauerhafter Betrieb bei hohen Drücken erfolgt. Dieses Downsizingpotential ist daher ggf. begrenzt auf Fahrzeuge im autonomen Fahrbetrieb mit reduzierten Geschwindigkeiten in bestimmten Klimazonen, wo keine kritischen ASR-Anforderungen erfüllt werden müssen (z.B. Fahrzeugbetrieb in Indien)

- die vorteilhafte Multiplexregelung (MUX-Regelung) oder die präzise PPC-Regelung mit PWM-Steuerung der Ventile ist beim Druckaufbau und/oder Druckabbau einsetzbar und ermöglicht somit sehr viele Freiheitsgrade in der präzisen Druckregelung mehrerer hydraulischer Stellglieder. Zudem ist eine Kombination von MUX-Regelung und PPC/PWM-Regelung möglich, wodurch eine sehr präzise Abstimmung auf den mindestens einen elektrischen Antriebsmotor möglich ist und gleichzeitig bremskreisindividuelle Bremsdrücke eingestellt werden können;
- die EBV-Funktion, d.h. die elektrische Bremskraftverteilung zwischen Vorderachse und Hinterachse, kann deutlich einfacher und mit höherer Regelgüte als bei bekannten Bremssystemen im Markt, z.B. auf Basis MKC1-Bremssystem gemäß DE102013224313A1 oder Bremssystem gemäß US9981645B2, umgesetzt und appliziert werden, da in den bekannten Bremssystemen das PPC-Verfahren, die MUX-Regelung sowie PWM-Steuerung von Auslassventilen in Druckauf- und Druckabbau nicht genutzt wird oder aufgrund Einschränkungen des Hydraulikkonzeptes nur teilweise genutzt werden kann. Beispielweise erfordert das MUX-Verfahren Ventile, die den Druck halten müssen. Dies ist durch die Parallelschaltung von Rückschlagventilen zu den Schaltventilen beim Druckabbau nicht möglich. Gleichzeitig kann der erfindungsgemäßen zentralen Fahrdynamikregelung das Bremsmoment der Elektromotoren zur Verstärkung der Dynamik sowie Maximierung des Bremsmomentes in der Achsbremsmomentverteilung ergänzend genutzt werden. Hierdurch ist eine Optimierung der Bremsverzögerung unter Berücksichtigung unterschiedlicher Achslasten, z.B. bei starker Verzögerung signifikant höhere Drücke an Vorderachse, bzw. daraus resultierend unterschiedlicher Bremsmomentverteilungsbedarf an den Achsen möglich; dieses Merkmal hat Bedeutung bei Rennfahrzeugen, z.B. Rally-Fahrzeugen mit elektrischen Antrieben an Vorder- und Hinterachse oder sog. Super Cars oder Hyper Cars mit Antriebsleistungen > 300 kW mit zugleich hohen Dynamikanforderungen.

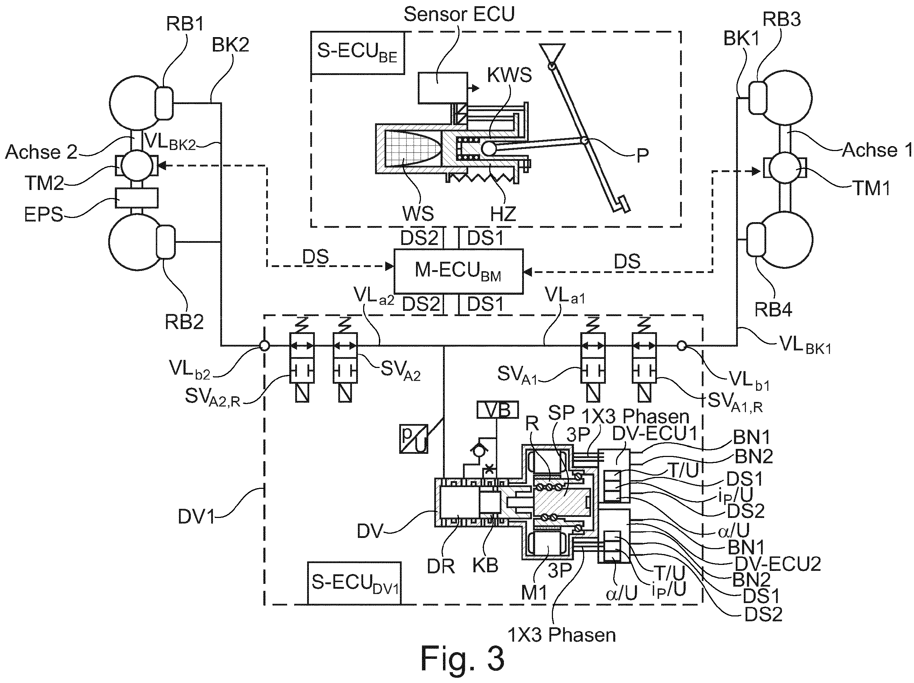

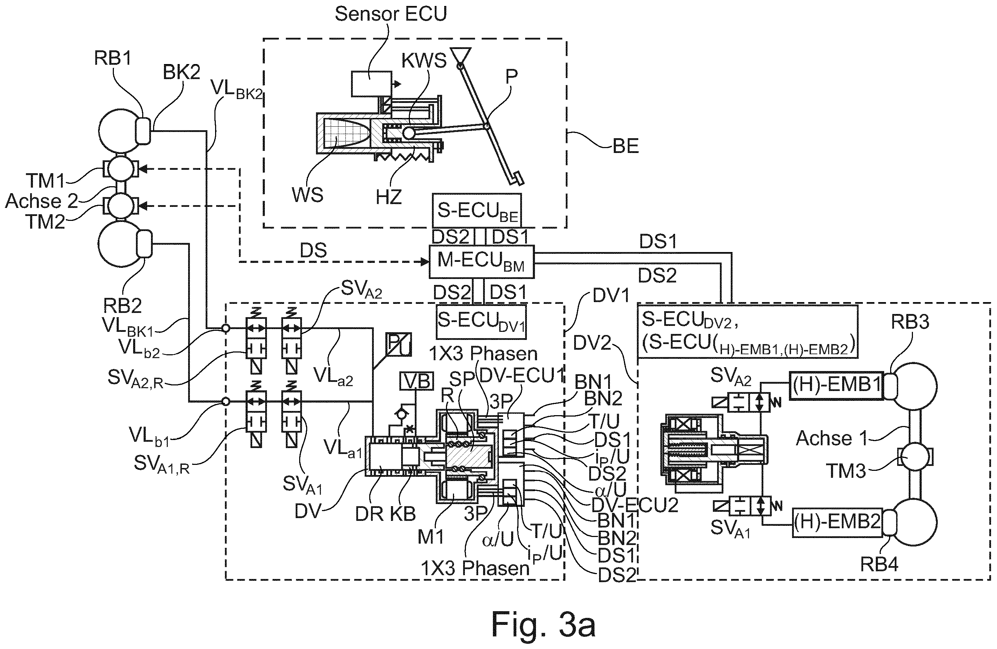

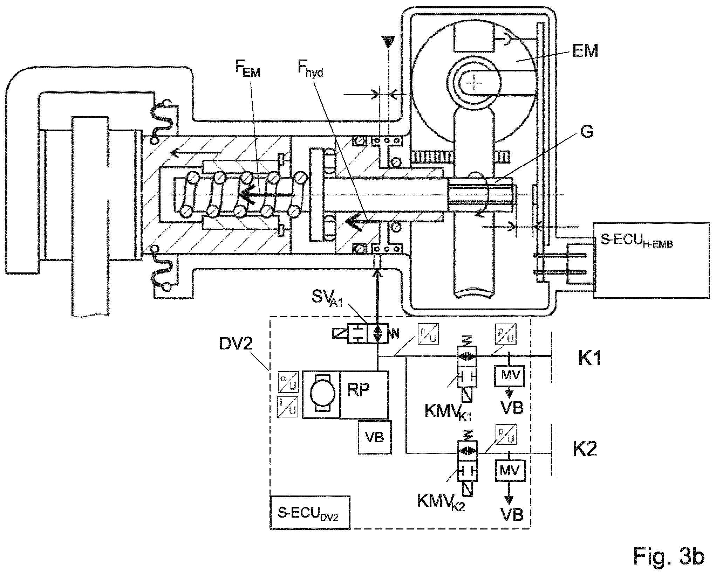

- vorteilhafte Möglichkeit der Optimierung der Bremsmomentaufbaudynamik durch gleichzeitige Nutzung des hydraulischen Bremssystems und der Elektromotoren, wodurch z.B. eine kürzere Zeit zum Erreichen des Blockierdruckes, insbesondere bei Notbremsfunktionen, erzielbar ist;
- Optimierungsmöglichkeit der Rekuperationsleistung über die Elektromotoren, derart, dass in gewissen Situationen bei niedrigen Fahrzeuggeschwindigkeiten <120 km/h ausschließlich bzw. weitestgehend, insbesondere mehr als zweidrittel (2/3) der Verzögerung, über den einen oder beide elektrische Antriebsmotor(en) (Traktionsmotor(en)) erzielbar sind, z.B. bei geringen Fahrgeschwindigkeiten. Die Verzögerungsleistung ist dabei begrenzt durch die max. Leistung und das maximale Drehmoment des Elektromotors;
- eine einfache und sichere Regelung der Bremsdrücke über die Druckversorgungseinrichtung im Multiplexbetrieb (MUX-Betrieb) mit sehr geringem Ventilaufwand im zugleich geschlossenen Bremskreis, d.h. ohne Auslassventile, die im Regelbetrieb die Bremskreise mit dem Vorratsbehälter verbinden, ist möglich. Der Entfall von Auslassventilen hat den Vorteil, dass die Bremskreise im aktiven Betrieb mit dem Vorratsbehälter nicht hydraulisch verbunden werden und damit können unerkannte Undichtigkeiten bei Ventilen, z.B. durch Schmutzpartikel im Ventilsitz (schlafende Fehler) vermieden bzw. diagnostiziert werden, was die Zuverlässigkeit erhöht;
- Das Fahrdynamiksystem hat in bestimmten Ausführungsformen des erfindungsgemäßen Systems, siehe insbesondere die in den Figuren 3 und 3a gezeigten und beschriebenen Ausführungsformen, eine sehr hohe Verfügbarkeit durch die nachfolgend aufgeführten Redundanzen, welche einzeln oder in Kombination oder alle bei dem erfindungsgemäßen Bremssystem vorgesehen werden können:
   a) redundante und zugleich diagnostizierbare Dichtungen in sowohl der Betätigungseinheit und Druckversorgung,
   b) redundante 2x3 Phasen-Kontaktierung der Anschlüsse des Elektromotors der Druckversorgung,
   c) redundante in Reihe geschaltete Ventile zwischen Druckversorgung und Bremskreis bzw. zwischen Betätigungseinheit und Bremskreis,
   d) redundante Bordnetzanschlüsse der Slave-ECUs,
   e) Redundanz durch Bremsen über Elektromotor bei Ausfall oder Teilausfall der Druckversorgung.
   f) Redundante Datenübertragung z.B. durch über redundante kabelgebundene Datenübertragung oder kabellose Datenübertragung mit hohem Sicherheitsstandard (z.B. mit Datenübertragungsmöglichkeiten mit geringer Latenzzeit, z.B. 5G-Funktdatenübertragung oder neuen Bluetooth-Protokollen erfolgen) bzw. Kombination von kabelgebunden und kabelloser Datenübertragung

Die Merkmale a) bis f) erfüllen die Sicherheitsanforderungen einer reinen Brake-by-Wire mit E-Pedal bzw. Fahrzeugen ohne Betätigungseinheit, d. h. fahrerlose Fahrzeuge;
- eine sehr gute Diagnosemöglichkeit der hydraulischen Fehler, wie z.B. Undichtigkeiten oder Bremskreisausfall, ist durch die Ausführung als geschlossenes System (keine schlafenden Fehler) möglich und die Diagnose durch Druckaufbau über die Druckversorgung ist ebenso möglich;
- die Druckversorgung kann alternativ als eine über einen Elektromotor und eine nicht-hydraulische Getriebevorrichtung angetriebene Kolben-Zylinder-Einheit oder eine über einen Elektromotor angetriebene Rotationskolbenpumpe, insbesondere einer Zahnradpumpe, ausgebildet werden, die dadurch gekennzeichnet ist, dass die Druckversorgung in beiden Ausführungsformen unter Verwendung entweder einer Kolbenpumpe oder einer Rotationspumpe sowohl Druck aufgebaut als auch Druck abgebaut werden kann und somit die oben beschriebenen Regelverfahren eingesetzt werden können. Bei Verwendung einer Zahnradpumpe ist der Begriff PPC-Druckregelverfahren nicht zutreffend, die Regelung erfolgt anstatt über die Kolbenposition über eine Winkelposition der Rotationspumpe und entspricht damit einem verdrängten Volumen, wobei vorteilhaft die Druck-Volumen-Kennlinie und der Motorstrom bei beiden Verfahren für die Druckregelung genutzt werden können. Bei Verwendung einer Zahnradpumpe muss zusätzlich die prinzipbedingte Leckage der Rotationspumpe erkannt und in der Regelung berücksichtigt werden.
- es besteht vorteilhaft, bei ausreichender Redundanz der Betätigungseinheit (red. Dichtungen) oder der Slave-Bremskrafterzeuger (Motoren, red. Druckversorgung), eine mechanische Rückfallebene, wobei die Betätigungseinheit vorteilhaft sehr einfach als einfacher kostengünstiger und kurzbauender Hauptbremszylinder ausgeführt werden kann; Dies hat eine hohe Bedeutung, insbesondere weil die Baulänge das Kofferraumvolumen eines E-Fahrzeuges beeinflusst und aus Crash-Gesichtspunkten aufgrund der Anbindung an der Spritzwand eines Fahrzeuges ein kritischer Auslegungspunkt ist.
- Das Fahrdynamiksystem kann vorteilhaft modular für verschiedene Ausführungsformen aufgebaut sein, wobei nachfolgend einige mögliche Modulbauweisen aufgezählt werden:
   a. zentrales Bremsenmanagement als separate Einheit oder Modul einer zentralen Domäne des Fahrdynamikmanagements oder Bestandteil der Druckversorgungseinrichtung bzw. deren Steuereinheit;
   b. einzelne Module, die bedarfsweise zusammengenommen und in verschiedenen Anordnungen zusammengefügt sind, wie z.B. aufgelöstes System mit separater Betätigungseinheit und separate Regeleinheit;
   c. aufgelöstes System mit separater Betätigungseinheit;
   d. aufgelöstes System mit E-Pedal und separater redundanter Regeleinheit und redundanter Datenübertragung;
   e. integrierte Einheit, wobei Betätigungseinheit und Druckversorgung mit 2-kreisiger Regelung in einem Modul zusammengefasst sind;
   f. Druckversorgung gebildet durch eine über einen Elektromotor und Getriebe angetriebene Kolben-Zylinder-Einheit oder gebildet durch eine über einen Elektromotor angetriebene Rotationspumpe, insbesondere in Form einer Zahnradpumpe;
   g. gesonderte ABS-Einheit bzw. Raddruckregeleinheit, die Bremskreisdrücke auf verschiedene Räder aufteilt, einfach gestaltbar sowie anschließbar die als Modul ausgebildete Druckversorgungseinrichtung anschließbar, wobei diese separat applizierbar auch für radindividuelle Regelung an den Achsen ist;
   h. ABS/ESP-Regeleinheit als Standalone-System mit eigener Druckversorgung (Redundanz) oder einfache Ventilregeleinheit unter Nutzung der Vordruckregelung durch das Bremssystem;
   j. Betätigungseinheit in separatem Gehäuse, abnehmbar von der Druckversorgung für aufgelöstes System, wobei die Druckversorgung parallel zur Betätigungseinheit angeordnet ist;
   k. Druckversorgung als Rotationskolbenpumpe, wobei die Achse der Rotationspumpe senkrecht zur Achse der Kolben-Zylinder-Einheit der Betätigungseinheit ausgerichtet ist, wobei die Rotationspumpe und Magnetventile in einer Baueinheit integriert sind.
   l. vollvariables Bremssystem für den Einsatz in einem Elektro-Achsmodul einer Elektroachse für ABS/ESP, Torque Vektoring, Lenkungseingriffe sowie gleichzeitiger Rekuperationsregelung über Elektromotoren und damit mit allen Freiheitgraden versehen für dynamischen und zugleich präzisen radindividuellen Druckregelung bei gleichzeitiger hoher Fehlersicherheit, Redundanzen und geschlossen Bremskreis. Während Lösungen gemäß Stand der Technik, z.B. WO2018/130406, durch den Magnetventilen der Radbremsen parallel geschaltete Rückschlagventile nicht die Möglichkeit bieten, Drücke in Rädern zu halten und gleichzeitig in anderen Rädern die Drücke zu reduzieren, hat das erfindungsgemäße Achsmodul keinerlei funktionale Einschränkungen und zudem ein höhere Regeldynamik. Dies erleichtert die Entwicklung, Applikation und Optimierung einer zentralen Fahrdynamikregelung mit Brems- und Lenkungseingriffen bei gleichzeitiger Rekuperation über Elektromotoren ohne Abhängigkeit von Einschränkungen bestehender Systemlösungen. Zudem ist ein derartiges Modul kombinierbar mit unterschiedlichen Systemlösungen an weiteren Achsen, z.B. elektromechanische Bremse H-EMB mit hydraulischer Druckversorgung als Redundanz, zweites Achsmodul mit dem gleichen Aufbau wie am ersten Achsmodul mit Differenzierung in einem kostengünstigeren Aufbau der Druckversorgung und gut integrierbar in eine reine Brake-by-Wire-Lösung mit E-Pedal bzw. zentraler Fahrdynamiksteuerung eines fahrerlosen Fahrzeuges (Robo-Taxi) ohne Betätigungseinheit.

### Mögliche Anwendungsbereiche für das erfindungsgemäße Fahrdynamiksystem

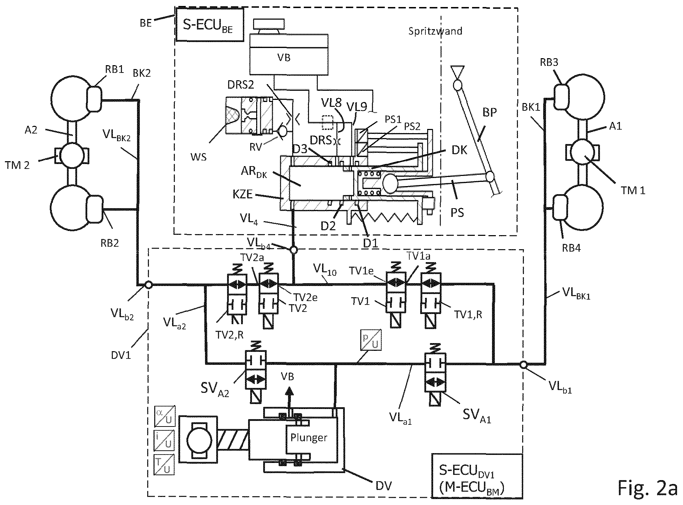

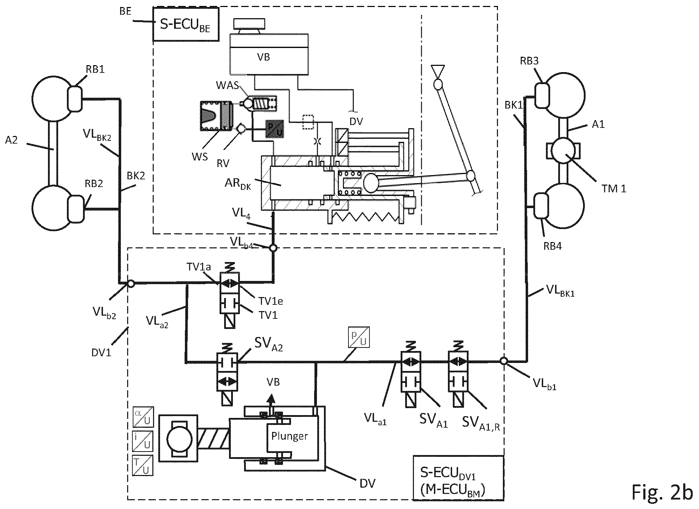

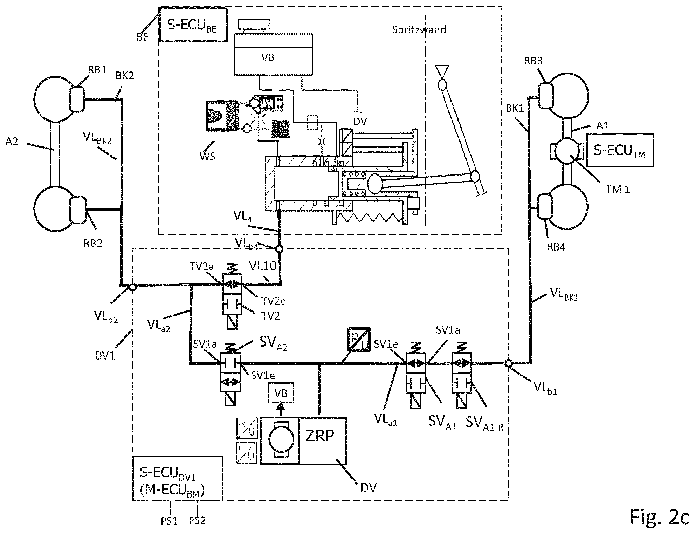

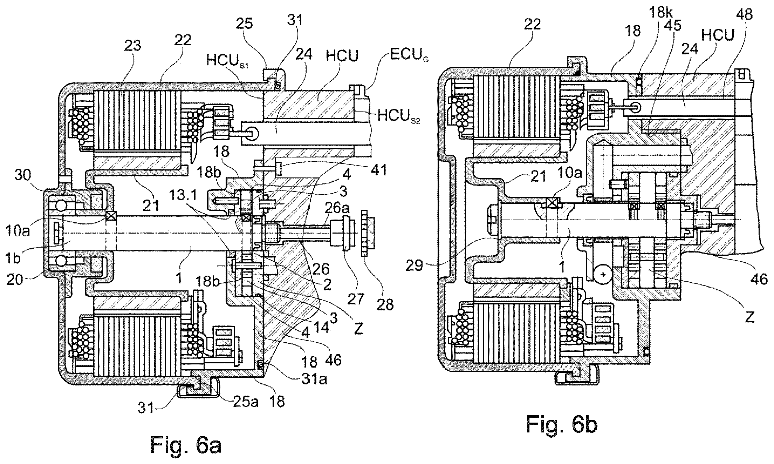

Das erfindungsgemäße Fahrdynamiksystem ist vorteilhaft für die folgenden Fahrzeugtypen einsetzbar:
- für Bremssysteme für Rennsportfahrzeuge mit Funktionsumfang der hochdynamischen und präzisen achsweisen Bremsmomentenregelung im Sinne der EBV-Optimierung (EBV = elektronische Bremskraftverteilung) sowie gleichzeitiger Rekuperation über mindestens einen Elektromotor an einer oder zwei Achsen;
- für Fahrzeuge ohne bzw. mit nur achsweiser ABS-Regelung, z.B. im Rennsport, Versuchsfahrzeuge für die Entwicklung von zentralen Fahrdynamikregelungen mit Elektromotoren an mehreren Achsen oder Fahrzeuge mit geringen Anforderungen an ABS-Regelung, wie z.B. langsam fahrende People-Mover Fahrzeuge;
- für Fahrzeuge mit sehr hoher Antriebsleistung und hohen Fahrdynamikanforderungen, sog. Super-Cars oder Hyper-Cars, mit elektrischen Traktionsmotoren an mehreren Achsen oder mehreren Rädern einer Achse;
- für 2-Radfahrzeuge mit je einem Elektromotor an einem Rad, z.B. E-scouter oder Elektro-Pedelecs, wodurch dann eine komplette 2-Rad ABS-Regelung möglich ist. Für die 2-Rad-Lösung wird insbesondere die kostengünstige elektrisch angetriebene Zahnradpumpe mit integrierter Hydraulikeinheit HCU gemäß Fig. 2 verwendet, welche derart abgewandelt ist, dass statt einer Achse mit zwei Rädern in einem Bremskreis nur ein Rad vorgesehen ist. Es kann ebenso ein Aufbau der Zahnradpumpe mit integrierter HCU mit Ventilen gemäß Fig. 6a, 6b eingesetzt werden. Gegenüber herkömmlichen 2-Rad-ABS-Systemen mit Kolbenpumpe kann der Druck durch PPC-Druckregelung sowie Multiplexbetrieb und PWM-Steuerung der Magnetventile sehr präzise und dynamisch gesteuert werden und optimal auf die Rekuperation über den elektrischen Antriebsmotor an einem Rad abgestimmt werden, wobei zusätzlich die EBV-Steuerung an den Rädern realisiert werden kann. Dies verbessert die Bremsperformance sowie Sicherheit von 2-Radfahrzeugen. Das zentrale Bremsenmanagement ist dann in der ECU der Druckversorgungeinrichtung vorzugsweise integriert.
- für E-Bikes (Elektro-Pedelecs) mit einem Zentralmotor oder Radnabenmotor, wo durch die erfindungsgemäße Zentralsteuerung eine ABS-Funktion an den beiden Rädern z.B. durch Einbindung Drehmoments eines Radnabenmotors realisiert. Wird ein Zentralmotor eingebunden, ist sicherzustellen, dass der zentrale Antriebsmotor bei ABS-Betrieb kein Antriebsmoment bzw. ein Bremsmoment erzeugt und sich nicht auf den Antriebsmotor auswirkt. Aus Kostengründen wird hier eine kostengünstige Lösung der Druckversorgung in der Ausführungsform als Rotationspumpe mit zwei Schaltventilen präferiert mit entsprechender Einbindung der Bremsanlage (z.B. Fig. 2c).
- für Fahrzeuge mit Elektro-Achsmodulen, z.B. Hinterachsmodul mit einem Traktionsmotor optional ergänzt um lastunterbrechungsfreien 2-Gang-Doppelkupplungsgetriebe für die Achse oder elektrischen Traktionsmotoren für die unterschiedlichen Räder einer Achse mit Rekuperation sowie ABS/ESP-,Torque Vektoring und/oder Lenkungsfunktion z.B. als weiteren Lenkungssteller in Ergänzung einer elektrischen Servolenkung an der Vorderachse. Das erfindungsgemäße Bremssystem kann auch für eine Notlenkungsfunktion bei Ausfall der elektrischen Servolenkung bzw. als Ergänzung zum Lenkungseingriff an einer Achse und/oder an einer zweiten Achse genutzt werden;
- für kostengünstige Fahrzeuge in BRIC-Ländern, wo achsweise, bremskreisindividuelle Regelung ausreichend ist und optional elektrische oder elektrohydraulische Servolenkung für Fahrzeugstabilisierungszwecke eingesetzt wird;
- modular ergänzbar mit separat operierender ABS/ESP-Regeleinheit, wobei beide Einheiten dann von separaten Bremsenherstellern bezogen werden können und zudem separat für das Fahrzeug applizierbar sind, wobei die Applikation der primären erfindungsgemäßen Bremsanlage durch den Fahrzeughersteller vorgenommen werden kann.
- modular einsetzbar in Kombination mit zusätzlichem Radbremsmodul an der zweiten Achse, z.B. Hinterachse, wo beispielsweise eine elektromechanische Bremse (EMB) oder hydraulisch unterstützte elektromechanische Bremse (H-EMB) eingesetzt wird, wobei dann im erfindungsgemäßen Bremssystem die zwei Bremskreise des Bremssystems auf die Räder der Vorderachse aufgeteilt werden, so dass aus dem erfindungsgemäßen Bremssystem ein vollwertiges ABS/ESP-System mit zusätzlichen Freiheitgraden der Lenkungseingriffs und Torque-Vektoring bei gleichzeitiger Rekuperation gebildet werden kann, wobei beide erfindungsgemäße Achsmodule und elektromechanische(n) Bremse(n) EMB in das Bremsenmanagement integriert und zentral gesteuert werden. Diese Variante der erfindungsgemäßen Bremsanlage ist prädestiniert für eine E-Pedallösung bzw. fahrerlose Fahrzeuge ohne Pedal. Alternativ zur EMB bzw. H-EMB an der zweiten Achse kann die erfindungsgemäße Lösung auch für die zweite Achsen dupliziert werden.

Nachfolgend werden anhand von Zeichnungen mögliche Ausführungsformen des erfindungsgemäßen Fahrdynamiksystems näher erläutert.

Es zeigen:
- Fig. 1:: eine erste mögliche Ausführungsform eines erfindungsgemäßen Fahrdynamiksystems mit modularem Aufbau mit Tandem-Hauptbremszylinder THZ und zweikreisiger Rückfallebene in Vorderachse und Hinterachse;
- Fig.1a:: eine erste mögliche Ausführungsform eines zentralen Bremsenmanagement für ein Bremssystem für eine Fahrerwunschregelung (FW) oder eine alternative Regelung bei autonomem Fahren (AD-Ctrl);
- Fig.1b:: eine weitere mögliche Ausführungsform des Bremssystems, bei dem die Verbindung des zweiten Bremskreises mit der Druckversorgungseinrichtung über die Kolben-Zylinder-Einheit der Betätigungseinrichtung erfolgt und das Schaltventil zwischen der Kolben-Zylinder-Einheit und dem Anschluss der Druckversorgungseinrichtung angeordnet ist;
- Fig.1c:: eine weitere mögliche Ausführungsform des Bremssystems, bei dem die Verbindung des zweiten Bremskreises mit der Druckversorgungseinrichtung über die Kolben-Zylinder-Einheit der Betätigungseinrichtung erfolgt und das Schaltventil zwischen der Kolben-Zylinder-Einheit und der Druckversorgung der Druckversorgungseinrichtung angeordnet ist;
- Fig. 2a:: eine Abwandlung der Ausführungsform gemäß Figur 1 mit einem Single-Hauptbremszylinder mit Verzweigungsschaltung und Hauptbremszylinder mit redundanten diagnostizierbaren Dichtungen aus, sowie einer Gateway-Schaltung;
- Fig. 2b:: eine Abwandlung der Ausführungsform gemäß Figur 3a, wobei lediglich die Betätigungseinheit in der Rückfallebene auf den zweiten Bremskreis wirkt, und bei der bei Bremskreisausfall durch Bremswirkung der Motoren an der Vorderachse und Hinterachse ein Bremsmoment erzielbar ist;
- Fig. 2c:: Ausführungsform wie Fig. 3b, wobei die Druckversorgung als elektrische angetriebene Rotationspumpe, z.B. Zahnradpumpe ausgebildet ist, wobei die Regelung des Drucks über Winkelgeber (Position der Zahnradpumpe) und Strom (Drehmoment) erfolgen kann;
- Fig.3:: fehlersichere redundante Ausführungsform mit E-Pedal für Rekuperation und achsweise Druckregelung im MUX und PWM-Betrieb;
- Fig.3a: Elektro-Achslösung mit zentraler Steuerung mit radindividueller Regelung und mehrfachen Redundanzen in Bremssystem;
- Fig. 3b: eine Querschnittsdarstellung durch eine hydraulisch unterstützte elektromechanische Bremse H-EMB;
- Fig. 4:: Ausführungsform gem. Fig. 1c ergänzt um separat operierende ABS/ESP-Einheit;
- Fig.5:: Druckversorgung mit 2x3-Phasen und red. diagnostizierbare Dichtungen;
- Fig.6a, 6b:: Druckversorgungseinrichtung mit im Elektromotor integrierter Rotationspumpe und HCU;
- Fig. 7a:: 2-Kanal Druckaufbauregelung mit PPC-Regelung und mit zusätzlich PWM-Steuerung eines Ventils, das die Druckversorgung DV mit Hinterachse verbindet;
- Fig. 7b:: 2-Kanal Druckabbauregelung mit PPC-Regelung und mit zusätzlich PWM-Steuerung eines Ventils, das die Druckversorgung DV mit Vorderachse verbindet;
- Fig. 7c:: 2-kanal MUX-Regelung;
- Fig.8a - Fig. 9b:: verschiedene mögliche Modulbauweisen für das erfindungsgemäße Bremssystem, insbesondere die vorbeschriebenen Ausführungsformen;
- Fig. 10:: Bremssystem für 2-Räder (ein Rad in einer Achse).

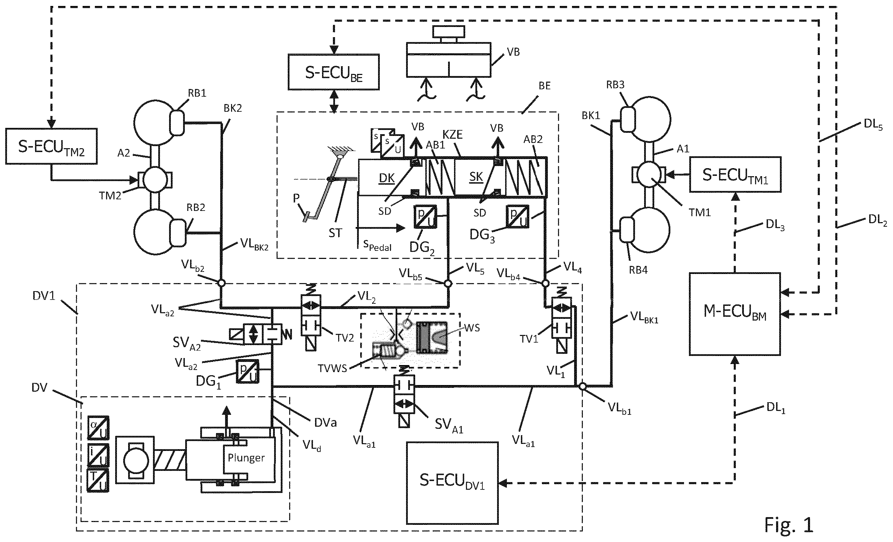

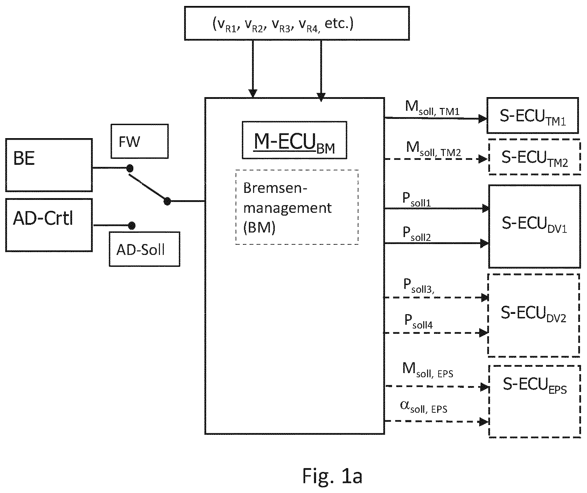

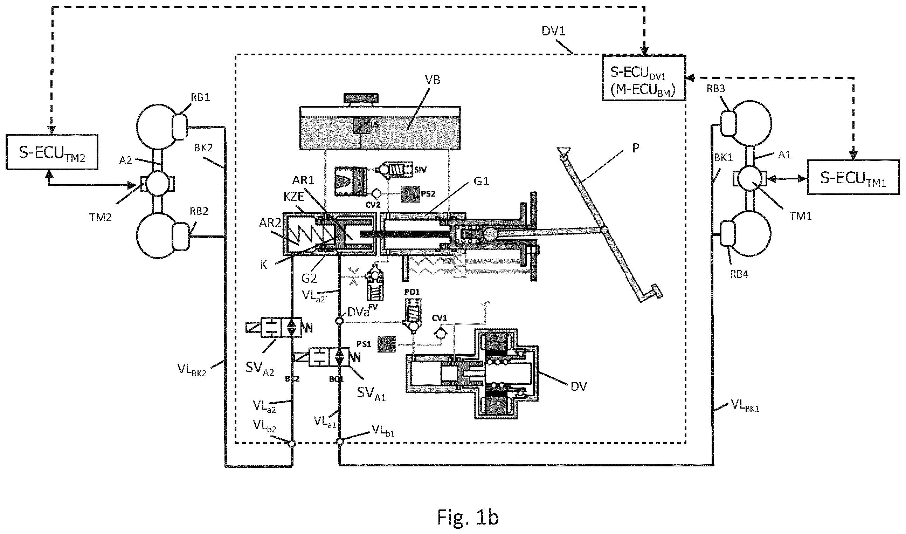

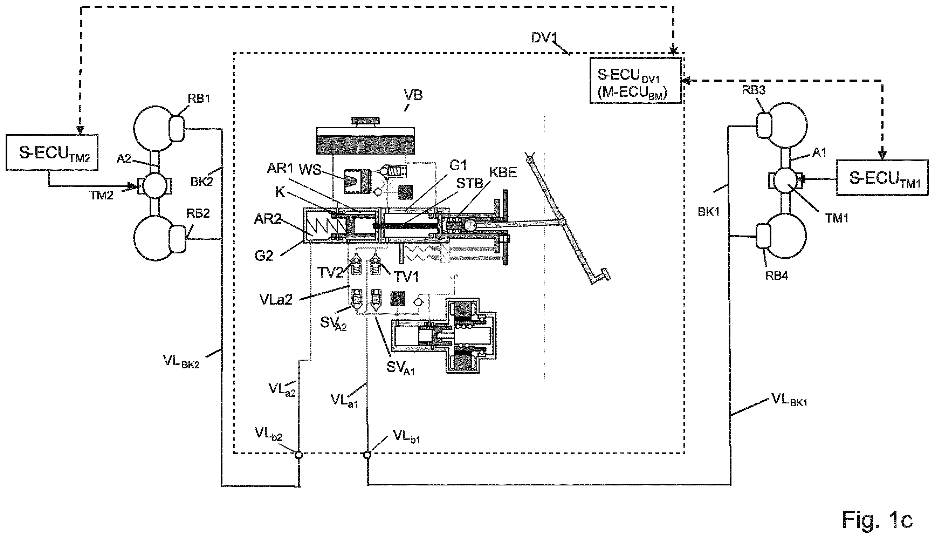

**Figur 1** zeigt eine erste mögliche Ausführungsform eines erfindungsgemäßen Fahrdynamiksystems mit der erfindungsgemäßen zentralen Steuerung über eine zentrale Steuer- und Regeleinrichtung M-ECU_{BM}, die Steuersignale an die Steuer- und Regeleinrichtung S-ECU_{DV1} der Druckversorgungseinheit DV1 der Bremsanlage sowie die Steuer- und Regelungseinrichtungen S-ECU_{TM1}, S-E-CU_{TM2} der Traktionsmotoren schickt und aus der Steuer- und Regelungseinrichtung S-ECU_{BE} der Betätigungseinheit BE Fahrerwunschsignale einliest. Die Bremsanlage ist modular aufgebaut und weist eine getrennte Betätigungseinheit BE und Druckversorgungseinrichtung DV auf.

Die Betätigungseinrichtung BE weist eine Bremspedal P sowie eine Betätigungsstange ST auf, welche auf einen Tandem-Hauptbremszylinder THZ wirkt, welcher wiederum ausgeführt ist mit einem Druckkolben DK und Druckkolbenarbeitsraum AB1 und einem Schwimmkolben SK sowie Schwimmkolbendruckarbeitsraum AB2. Es sind zudem Sensoren für die Erkennung des Pedalhubs und Druckgeber DG2 und DG3 für eine redundante Fahrerwunscherkennung vorgesehen. Alternativ kann in der Betätigungseinheit BE nur ein Druckgeber DG2 oder DG3 eingesetzt werden bzw. kann auf die Druckgeber in der Druckversorgung komplett verzichtet werden, wenn ein Kraft-Weg-Sensorik KWS gemäß WO 2012059175A1 zur Kraftmessung eingesetzt wird. Die Druckkammern AB1, AB2 des Druckkolbens DK und des Schwimmkolbens SK sind zum Nachsaugen von Volumen über Schnüffellochdichtungen SD mit dem Vorratsbehälter VB verbunden. Die Betätigungseinheit BE ist über Trennventile TV1 und TV2 von der Druckversorgung DV/DV1 getrennt.

Die Druckversorgungseinrichtung DV besteht aus einer elektrisch angetriebenen Kolbenzylindereinheit mit Sensoren zur Erfassung von Winkelposition α des Rotors, Motorstrom i sowie Temperatur T sowie einer HCU mit Druckgeber DG1, Schaltventilen TV1, TV2 für die Trennung des Hauptbremszylinder von den Bremskreisen für den Brake-by-Wire betrieb und Schaltventilen SV_{A1} und SV_{A2} für die bremskreisindividuelle Regelung durch die Druckversorgungseinrichtung DV. Zusätzlich ist ein Wegsimulator WS vorgesehen, der hydraulisch mit der Druckkammer AB1 des Druckkolbens über die Leitung VL₅ verbunden ist und über ein Wegsimulatorabsperrventil TVWS absperrbar ist.

Für die Regelung des Bremsdruckes in Abstimmung mit der Rekuperationsregelung über den Elektromotor TM2 oder TM1 einer Achse wird das PPC-Regelverfahren mit Auswertung von Winkelposition α des Rotors des Elektromotors, Strom i des Elektromotors und optional Temperatur T des Motors eingesetzt, ergänzt um die Auswertung einer Druckvolumenkennlinie gemäß Stand der Technik, welche vorzugsweise im Betrieb angepasst wird. Wird ein Temperatursensor eingesetzt, wird die Temperatur T des Elektromotors dazu genutzt, um den Zusammenhang zwischen Strom und Drehmoment des Elektromotors anzupassen, weil sich die Drehmomentkonstante kt in Abhängigkeit der Temperatur T linear verringert. Dies wird vorteilhaft genutzt, um eine präzise dynamische Druckänderungsregelung zu realisieren, da die Regelung über den Strom i dynamischer ist, da Druckgeber als Sollsignal in der Istwerterfassung einen zeitlichen Verzug haben. Der Druckgeber wird primär dann für die Solldruckregelung verwendet, wenn es um die genaue Einstellung des Solldruckes geht, kann aber auch für die gesamte Regelung verwendet werden. Zudem wird der Druckgeber zur Kalibrierung der sich im Betrieb, z.B. durch Lufteinschlüsse, veränderlichen Druckvolumenkennlinie verwendet. Fällt der Druckgeber aus, wird ausschließlich über den Strom i, die Winkelposition α und die Druckvolumenkennlinie geregelt, wodurch eine zusätzliche Redundanz gegeben ist.

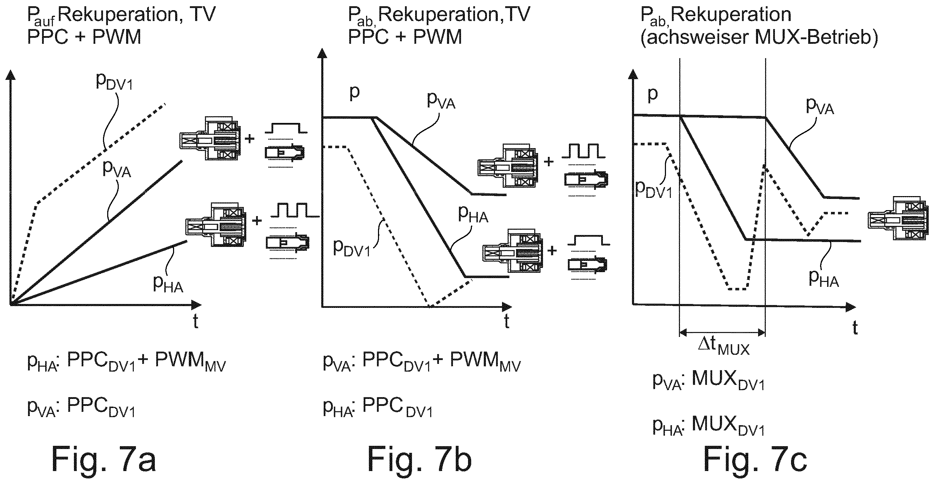

Die Schaltventile SV_{A1} und SV_{A2} sind als stromlos-geschlossene Ventile ausgebildet, um in der Rückfallebene die Druckversorgung DV von der Betätigungseinheit BE abzutrennen. Für die gleichzeitige Regelung von beiden Achsen wird das Multiplex-Verfahren (MUX-Verfahren) gemäß Stand der Technik eingesetzt, dass in Figur 7c nochmals beschrieben ist. Eine zusätzliche PWM-Steuerung der Ventile ist nicht möglich, da in dieser Ausführungsform die Schaltventile als Stromlos-geschlossen ausgebildet sind.

**Figur 1a** zeigt den Aufbau eines zentralen Bremsenmanagements für Ausführungsform A und B, d.h. in Ausführungsform A ein Bremssystem z.B. nach Figur 1, wobei für die Regelung nach Fahrerwunsch (FW) über eine Betätigungseinheit BE oder alternativ im autonomen Fahrbetrieb (AD-Ctrl) Sollsignale AD-Soll für das Bremsenmanagement (BM) durchgeführt wird. Dabei werden auch die Radgeschwindigkeiten V_{R1}, V_{R2}, V_{R3}, V_{R4} und weitere Signale (z.B. Giermoment) berücksichtigt werden. Das Bremsenmanagement sendet dabei Sollmomente M_{Soll} an die Steuerungen S-ECU_{TM1/TM2} der Traktionsmotor(en) und Solldrücke pₛₒₗₗ₁, pₛₒₗₗ₂ für die Druckversorgung an die Steuerungseinheit S-ECU_{DV1} für die Druckversorgungseinrichtung DV1. Die Solldrücke pₛₒₗₗ₁ und pₛₒₗₗ₂ sind die Stellsignale, welche die Druckversorgungseinrichtung DV1 in den Bremskreisen BK1 und BK2 stellen sollen zur bremskreisindividuellen Regelung. Bei fahrerlosen Fahrzeugen kann auf die Betätigungseinheit verzichtet werden und das System wird rein im AD-Ctrl-Betrieb betrieben.

Im zentralen Bremsenmanagement der Ausführungsform A werden dann vorzugsweise folgende Funktionen implementiert:
- achsindividuelle Druckregelung für Rekuperation (Rekuperation)
- Bremskraftverteilung (EBV),
- achsweises ABS für Vierräder, ABS für Zweiräder

Wird Ausführungsform B (radindividuelle Regelung mit je einer Radbremse in einem Bremskreis, wie im folgenden bespielweise in Fig. 3a ausgeführt) realisiert, wird das Bremsenmanagement um eine weitere S-ECU_{DV2} bzw. weitere Bremsaktuatoren (z.B. EMB) erweitert, mit den zusätzlich Solldrucksignale pₛₒₗₗ₃ und pₛₒₗₗ₄ an die zweite Druckversorgung DV2 für eine individuelle Regelung von zwei Radbremsen in je einem Bremskreis (DV1 steuert RB1 und RB2, DV steuert RB3 und RB4) gegeben werden. Wird eine EMB eingesetzt, werden statt Solldrücken pₛₒₗₗ₃ und pₛₒₗₗ₄ Sollbremsmomente als Sollsignale gesendet. Anstatt Solldrücken pₛₒₗₗ₁,pₛₒₗₗ₂ pₛₒₗₗ₃ und pₛₒₗₗ₄ können auch Sollbremsmomente Mₛₒₗₗ₁, Mₛₒₗₗ₂, Mₛₒₗₗ₃ und Mₛₒₗₗ₄ an die S-ECU_{DV1} und S-ECU_{DV2} gesendet werden, welche in der jeweiligen S-ECU dann in Solldrücke umgerechnet werden.

Optional wird auch eine ECU einer elektrischen Servolenkung (S-ECU_{EPS}) in das Bremsenmanagement eingebunden. Dies wird verwendet, um Torque-Vektoring bzw. Giermomenteingriffe der S-ECU_{DV1} bzw. S-ECU_{DV2} mit der elektrischen Servolenkung EPS zu synchronisieren im Sinne der Redundanz der Lenkung (Notlenkung bei Ausfall der Servolenkung) bzw. Verbesserung der Agilität durch simultanen Einsatz von elektrischer Servolenkung und Torque-Vektoring.

Im zentralen Bremsenmanagement der Ausführungsform B werden dann vorzugsweise folgende primäre Funktionen implementiert:
- achsindividuelle Druckregelung für Maximierung der Rekuperation über Traktionsmotoren
- elektronische Bremskraftverteilung (EBV)
- radindividuelles ABS, ESP, ASR
- Fahrzeuglenkung (Lenkungs-/ Giermomenteingriffe der Servolenkung und des Bremssystems)
- Ansteuerung der elektrischen Parkbremse (H-EMB)

Das Bremsenmanagement ist erweiterbar um weitere Achsen sowie weitere Drucksteller für weitere Achsen (z.B. für LKW-Fahrzeuge), zudem neben den o.g. Funktionen können die üblichen Funktionen von ABS/ESP-Systemen und Fahrerassistenzfunktionen in des zentrale Bremsenmanagement implementiert werden oder optional in die Slave-ECU oder AD-Crtl-Steuerung ausgelagert werden.

**Figur 1b** zeigt den elektrischen Bremskraftverstärker X-Boost einer 2-Box-Bremsanlage, wie in WO2018233854A1 - Seite 4 definiert und im Text der Patentschrift beschrieben. Der X-Boost wird in WO2018233854A1 mit einer ESP-Anlage eingesetzt. Im Gegensatz zur Offenbarung wird der X-Boost als-StandAlone-Einheit ohne 2. Box (ESP-Einheit) betrieben und weist zwei Schaltventile SV_{A1} und SV_{A2} zum individuellen Betrieb der Bremskreise BK1 und BK2 auf. Der Druck wird über die Druckversorgung DV durch Vor- und Rückbewegung des Kolbens der Druckversorgung gesteuert, wobei der Druck über eine hydraulische Verbindung via PD1-Ventil und SV_{A1}-Venil zum Bremskreis BK1 und im Weiteren via PD1-Ventil über den Schwimmkolben K und SV₂-Ventil in den Bremskreis BK2 übertragen wird. Die Schaltventile sind dabei vorzugsweise stromlos-Offen ausgeführt, wodurch die vorher ausgeführte bremskreisindividuelle simultane bzw. teilsimultane Druckverlaufsreglung über PPC-Regelung des Kolbens der Druckversorgung DV sowie in einem Bremskreis ergänzt um PWM-Reglung bzw. Stromregelung der Schaltventile SV_{A1} und SV_{A2} realisiert wird bzw. werden kann. Alternativ oder ergänzend zur PWM-Regelung kann auch hier das Multiplexverfahren eingesetzt werden.

Die ECU des X-Boost ist hier als Slave-ECU S-ECU_{DV1} oder Master-ECU_{BM} ausgeführt. In der Ausführung als S-ECU_{DV1} wird die Regelung des X-Boost in eine Zentralsteuerung integriert, in der Ausführung als Master-ECU_{BM} wird über die Steuerelektronik des X-Boost die ECUs des Traktionsmotors TM1 oder TM2 einer Achse bzw. von zwei Traktionsmotoren an 2 Achsen gesteuert. Damit wird die Rekuperationssteuerung mit der bremskreisindividuellen Bremskreissteuerung optimal kombiniert.

Die Druckversorgung DV ist als eine über einen Elektromotor und einen Spindeltrieb angetriebene Kolbenpumpe ausgeführt. Alternativ zur Kolbenpumpe kann auch eine Rotationspumpe eingesetzt werden. Erfinderische Ausführung einer Rotationspumpe als Zahnradpumpe mit HCU sind in den Figuren 6a und 6b näher ausgeführt.

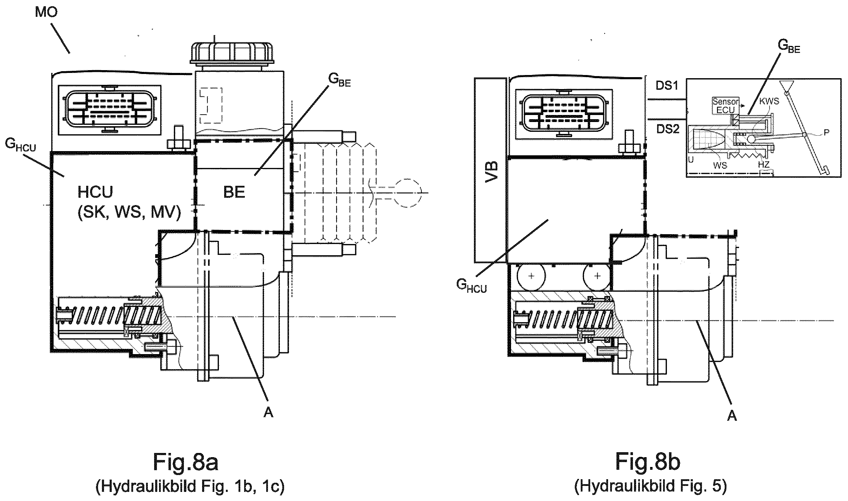

Zudem kann es aus Fertigungsgründen vorteilhaft sein, den Hauptbremszylinder in zwei Gehäuseteile G1 und G2 aufzuteilen, wobei das erste Gehäuse G1 den Druckkolben der Betätigungseinheit BE aufweist und das zweite Gehäuse einen Schwimmkolben K aufweist. Dies ermöglicht eine Bauform, wie in Figur 8a im Weiteren erläutert.

Die **Figur 1c** zeigt eine weitere mögliche Ausführungsform des Fahrdynamiksystems mit einem Aufbau des Bremskraftverstärker (X-Boost) mit Funktionalität wie in Fig. 1b, jedoch mit einer alternativen Ventilschaltung. Hier wird das Schaltventil SV_{A2} direkt an die Druckversorgung DV angeschlossen und die Druckübertragung in den Bremskreis BK2 erfolgt über den Schwimmkolben K. Die Druckübertragung in den Bremskreis BK1 erfolgt über das SV_{A1}-Ventil direkt ohne vorgeschaltetes PD1-Ventil. Durch diese Ausbildung können die Drosselwiderstände zwischen Druckversorgung DV und Bremskreis BK1 reduziert werden und die Drosselverluste zwischen Druckversorgung DV und BK1 und BK2 annähernd gleich gestaltet werden. Die Drosselwirkung zwischen Druckversorgung und Bremskreis BK2 ist aufgrund der Reibung der Dichtungen des Schwimmkolbens K nur geringfügig höher. Damit kann die bremskreisindividuelle Regelung in der Applikation i.V. zu Ausführung der Figur 1b vereinfacht werden. Der erste Kolben der Betätigungseinheit BE wird zur Fahrerwunscherkennung und für die Rückfallebene genutzt. In der Rückfallebene, d.h. bei Ausfall der Druckversorgung, wird der Druck über Trennventile TV1 in Bremskreis BK1 geleitet und über TV2 und Schwimmkolben K in Bremskreis BK 2. Zusätzlich ist optional ein Stößel STB vorgesehen, der in der Rückfallebene direkt auf den Schwimmkolben K wirken kann.

In Figur 1c sind die beiden Kolben der Betätigungseinheit BE in einem Gehäuse angeordnet. Alternativ kann der Kolben KBE der Betätigungseinheit BE in einem ersten Gehäuse und der Schwimmkolben K in einem zweiten Gehäuse angeordnet sein. Eine Trennung der Gehäuse ermöglicht eine aus fertigungsgründen vorteilhafte Bauform der Bremsanlage, wie in Fig. 8a näher ausgeführt. Diese Bauform kann im Sinne der Modulbauweise mit gleicher Fertigungstechnologie sinnvoll auf eine E-Pedal-Lösung mit separater Betätigungseinheit und Druckerzeuger mit Magnetventilen abgewandelt werden.

Die **Figur 2a** zeigt eine Abwandlung der Ausführungsform gemäß Figur 1 mit einem Single-Hauptbremszylinder mit T-Verzweigungsschaltung mit zwei Trennventilen TV1 und TV2, die eine Verbindung zwischen Hauptbremszylinder und den Bremskreis BK1 und/oder den Bremskreis BK2 herstellen können. Die Druckregelung im Bremskreis BK1 und BK2 erfolgt über eine elektrisch angetriebene Kolben-Zylinder-Einheit im PPC-Druckregelverfahren unter Nutzung der Winkelposition des Rotors, Strom und Temperatur des Elektromotors und Multiplexbetrieb. Diese Einschränkung ist sinnvoll, da Stromlos-geschlossene Magnetventile die Bremskreise von der Druckversorgung bei Ausfall der Druckversorgung die Druckversorgung effektiv von der Betätigungseinheit BE trennen. Bei Ausfall wirkt der Druck der Betätigungseinheit BE dann wahlweise in beide Bremskreise oder nur in einen Bremskreis. Diese Entscheidung kann je nach erkannten Fehlerfall getroffen werden, sowie die Verfügbarkeit der Traktionsmotoren an einer oder beiden Achsen zur ergänzenden Bremsmomenterzeugung zur Realisierungen einer stärkeren Verzögerung genutzt werden kann bzw. im Doppelfehlerfall Ausfall von Druckversorgung und Bremskreis eine ausreichende Verzögerung gewährleisten. Bei Bremskreisausfall wird der Hydraulikdruck nur in den nicht ausgefallenen Bremskreis geführt und die jeweilige Achse, wo der Bremskreis aufgefallen ist, wird durch das Motormoment des Traktionsmotors abgebremst. Damit ist eine ausreichende Verzögerung auch im Fehlerfall möglich, womit die gesetzlichen Anforderungen der Notbremsfunktion bei Standardfahrzeugen von ca. 0,5 g erfüllt sind.

Zur Verbesserung der Sicherheit können optional zwei in Reihe geschaltete Trennventile TV1 und TV1_{R} sowie TV2 und TV2_{R} vorgesehen werden, so dass bei Bremskreisausfall der zweite Bremskreis nicht betroffen ist und die Druckregelung nicht auf den Hauptbremszylinder wirkt.

Im Sinne der weiteren Verbesserung der Zuverlässigkeit wird statt eines Tandem-Hauptbremszylinder ein spezieller Hauptbremszylinder mit 3 redundanten Dichtungen mit Diagnosemöglichkeit vorgesehen. Der Hauptbremszylinder weist die Dichtungen D1, D2 und D3 sowie Verbindungsleitungen VL8 und VL9 zum Vorratsbehälter VB auf. Ein derartiger Aufbau ermöglicht zum einen redundante Dichtungen, zum anderen kann der Ausfall diagnostiziert werden.

Der Hauptzylinder KZE wird mittels eines Pedalstößels PS über einen Druckkolben DK betätigt, welcher in bekannter Weise über ein Schnüffelloch an den Vorratsbehälter VB angeschlossen ist. Der DK-Kolben ist über verschiedene Dichtungen im Hauptzylinder KZE abgedichtet: eine Sekundärdichtung D1 nach außen, eine Dichtung D2 zum Druckraum AR_{DK} und eine Dichtung D3 als redundante Dichtung zu D2 mit Drossel DRS. Fällt Dichtung D3 aus, entsteht ein Leckstrom, der von der Drossel DRS begrenzt wird. Dieser Leckstrom wird als Volumenverlust und Pedalwegverlängerung von zwei Pedalwegsensoren PS1, PS2 erkannt. Die Drossel DRS ist so bemessen, dass die Pedalwegverlängerung während einer Bremsung nur gering ist. Die Drossel DRS kann auch in Leitungen D1 und D2 zum Vorratsbehälter VB eingesetzt werden, mit einem zusätzlichen (nicht dargestellten) Rückschlagventil parallel zur Drossel DRS, welches zu D1/D2 hin öffnet.

Der Druckraum AR_{DK} Hauptbremszylinder ist zudem für die Brake-By-Wire-Funktionalität mit einem Wegsimulator WS verbunden. Zwischen Wegsimulator und Druckraum ist ein Rückschlagventil und eine weitere Drossel DRS2 angeordnet. Der Hauptbremszylinder weist redundante Pedalwegsensoren nach dem KWS-Prinzip (US 9541102) auf. Über den Pedalweg und die Differenzwegmessung über ein elastisches Element kann damit die Betätigungskraft des Fahrers ausgewertet werden. Wird auf KWS-Prinzip verzichtet, ist ein Druckgeber erforderlich, der den Druck im Arbeitsraum AR_{DK} misst. Dieser kann aus Redundanzwecken zusätzlich zum KWS-Prinzip vorgesehen werden.

Die **Figur 2b** zeigt eine Abwandlung der Ausführungsform gemäß Figur 2a, wobei lediglich die Betätigungseinheit BE in der Rückfallebene auf den zweiten Bremskreis BK2 wirkt und die Traktionsmotoren TM1 und TM2 an einer oder beiden Achsen A1, A2 zusätzlich zur Verzögerung der Räder im Fehlerfall beitragen. Zudem ist der Hauptbremszylinder anders ausgeführt.

Die Druckregelung in den Bremskreisen erfolgt analog wie beim in Fig. 2a ausgeführten Bremssystem über die Druckversorgungseinheit DV1. Hier sind zur sicheren Abtrennung der Achse A1 bei Bremskreisausfall redundante Schaltventile SV_{A1} und SV_{A1,R} vorgesehen, die stromlos offen sind. Dadurch kann neben der PPC und MUX-Regelung auch die PWM-Steuerung der Magnetventile für die Druckverlaufssteuerung eingesetzt werden kann. Durch die stromlos offene Ausführung können schlafende Fehler auftreten, z.B. Schmutzpartikel verhindern das Schließen der Ventile. Daher sind reihengeschaltete Ventile SV_{A1} und SV_{A1,R} vorteilhaft, so dass ein Bremskreisausfall BK1 an der Achse A1 nicht zu einem Totalausfall der Druckverstärkung führt. Auch im Bremskreisausfall ist der Bremskreis BK2 zusätzlich über ein stromlos geschlossenes Ventil SV_{A2} vom Bremskreis BK1 getrennt. Das stromlos geschlossene Schaltventil SV_{A2} wird auch als Trennventil in der Rückfallebene in der Rückfallebene verwendet und trennt die Betätigungseinheit von der Druckversorgung. Diese Reihenschaltung ist in der Verbindung zwischen Druckversorgung mit Bremskreis BK2 nicht erforderlich, da ein stromlos geschlossenes Ventil SV_{A2} eingesetzt wird, welches nicht anfällig für schlafende Fehler ist.

Der Hauptbremszylinder weist wie in Fig. 2 redundante diagnostizierbare Dichtungen auf und unterscheidet sich von der Variante in Fig. 2 dadurch, dass ein Wegsimulatorabsperrventil WAS sowie ein Druckgeber zur Druckmessung im Druckraum AR_{DK} zur Fahrerwunscherfassung vorgesehen ist. Durch den Druckgeber kann die Betätigungskraft redundant über Druckgeber und KWS erfasst werden. Das Wegsimulatorabsperrventil WAS wird zur Leerwegreduzierung im Ausfall der Druckversorgung und Einspeisung des Druckes der Betätigungseinheit über Trennventil in den Bremskreis BK2 eingesetzt. Auf das Wegsimulatorabsperrventil kann aber auch bei entsprechender Gestaltung des Wegsimulators und Akzeptanz eines Leerweges verzichtet werden.

Die **Figur 2c** zeigt eine weitere mögliche Ausführungsform mit dem gleichen Hydraulikkonzept wie in Figur 2b mit dem Unterschied, dass die Druckversorgung als elektrische angetriebene Rotationspumpe, z.B. Zahnradpumpe gemäß der Ausführungen in Fig. 7a und 7b ausgebildet ist, wobei die Regelung des Drucks über Winkelgeber (Position der Zahnradpumpe über Rotorposition des Motors) und Motorphasenstrom zur Schätzung des Motordrehmoment und des Druckes erfolgen kann. Die Zahnradpumpe kann wie eine Kolben-Zylinder-Einheit für den Druckaufbau und Druckabbau eingesetzt werden. Zum Druckabbau wird einfach die Drehrichtung des Motors der Zahnradpumpe geändert. Zudem kann auch bei der Zahnradpumpe die PPC und MUX-Regelung eingesetzt werden und durch PWM-Steuerung der Magnetventile ein weiterer Freiheitsgrad in der Druckverlaufsregelung bei stromlos offenen Ventilen zwischen Druckversorgung und Bremskreis BK1 erzielt werden. Im Gegensatz zur Druckversorgung als Kolben-Zylinder-Einheit ist in der Regelung eine Leckage einer Zahnradpumpe in der Druckreglung zu berücksichtigen. Daher wird der Druck bei Erreichen des Zieldruckes vorzugsweise durch Schließen der Schaltventile SV_{A1} und/oder SV_{A2} gehalten.

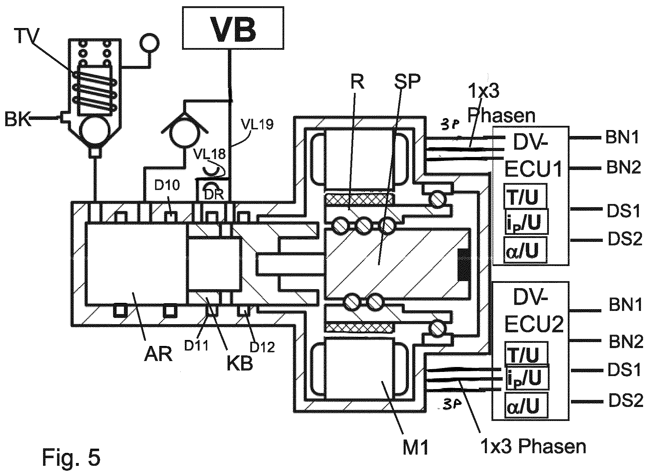

Die **Figur 3** zeigt eine reine Brake-by-Wire Lösung ohne hydraulische Verbindung zwischen Betätigungseinheit BE und Bremskreis mit einem E-Pedal. Eine zentrale M-ECU_{BM} liest die Signale des E-Pedals ein und gibt Sollsignale an die Steuer- und Regeleinrichtung S-ECU_{DV1} der Druckversorgungseinheit DV1. Zur Signalübertragung werden redundante Signalleitungen DS1 und DS2 eingesetzt. Die redundanten Datenübertragungen können kabelgebunden oder auch in Zukunft kabellos (z.B. mit Datenübertragungsmöglichkeiten mit geringer Latenzzeit, z.B. 5G-Datenübertragung bzw. Bluetooth-Protokollen) erfolgen. Die Druckversorgung DV sowie die Verbindung zu den Bremskreisen ist mit mehrfachen Redundanzen versehen, wie in Figur 5 näher ausgeführt, wobei die Bremskreise mit der Druckversorgung jeweils über zwei in Reihe geschaltete stromlos-offene Magnetventile SV_{A1}, SV_{A1,R} für Bremskreis BK2 sowie SV_{A2} und SV_{A2,R} für Bremskreis BK1 absperrbar sind bzw. getrennt sind, damit schlafende Fehler in einem Bremskreis sich nicht auf den zweiten Bremskreis auswirken können. Da die Ventile keine Sperrfunktion gegenüber der Betätigungseinheit BE abbilden müssen, können diese stromlos-offen ausgebildet werden und ermöglichen damit alle Freiheitsgrade in der bremskreisindividuellen Regelung (PPC-Regelung, PPC + PMW-Regelung, PPC + MUX-Regelung) und können sehr gut auf das Bremsmoment von einem oder mehreren Traktionsmotoren TM1, TM2 abstimmt werden.

Die **Figur 3a** zeigt die Ausführungsform B des erfindungsgemäßen Fahrdynamiksystems, wobei eine Bremsanlage als Modul für eine Elektro-Achse vorgesehen ist und die beiden Bremskreise der Bremsanlage die Radbremsen RB1 und RB2 einer Achse A2 bedienen. Zwischen der Druckversorgung und den Radbremsen sind in Reihe geschaltete Schaltventile SV_{A1} und SV_{A1,R} bzw. SV_{A2} und SV_{A2,R} vorgesehen, damit sich der Ausfall eines Bremskreises, wie oben beschrieben, nicht auf die Druckversorgung auswirkt und zum Ausfall des zweiten Bremskreises führt. An der Achse 2 sind ein Traktionsmotor TM1 oder zwei elektrische Traktionsmotoren TM1/TM2 vorgesehen, wobei der/die Traktionsmotor(en) die Achse oder die Räder direkt antreiben können. Diese Ausführungsform wird z.B. für eine Hinterachse gewählt, wo die elektrische Traktionsmotoren Ihre Wirkung wegen der Gewichtsverteilung bei der Beschleunigung besser auf die Straße übertragen können, insbesondere bei leistungsstarken Fahrzeugen.

Alternativ oder ergänzend zu den Traktionsmotoren TM1/TM2 kann an der Achse A2 auch eine elektrische Servolenkung eingesetzt werden. Dies ist zum Beispiel dann sinnvoll, wenn die Achse A2 die Vorderachse eines Kraftfahrzeuges ist, wo typischerweise die elektrische Servolenkung angeordnet ist.

Die Druckregelung erfolgt im PPC, MUX oder PPC mit PWM-Steuerung/Stromregelung der stromlos offenen Schaltventile. Die Bremsmomente können durch die Elektromotoren verstärkt werden im Sinne einer hohen Bremskraftdynamik bzw. im Sinne von weiteren Redundanzen. Zusätzlich kann durch die verschiedenen möglichen Ausführungsformen ABS/ESP-Regelung an einer Achse sowie Torque-Vektoring und Lenkungsfunktionen realisiert werden. Zusätzlich ist die Druckversorgung in mehrfachem Sinne redundant. Es sind redundante Dichtungen vorgesehen, die diagnostiziert werden können, zudem redundante Sensoren für Winkelposition, Temperatur und Strom, sowie ein redundanter Bordnetzanschluss. Wird als Getriebe ein Kugelgewindetrieb eingesetzt, kann der Eintritt von Schmutzpartikel in die Kugelbahn dazu führen, dass die Spindel blockiert. Um dies zu verhindern, sind entsprechend Qualitätsmaßnahmen zu ergreifen. Alternativ kann eine Trapezspindel ohne Kugeln eingesetzt werden mit dem Nachteil des schlechteren Wirkungsgrades und der geringeren Belastung. Auch ist denkbar, dass anstatt der elektrisch angetriebenen Kolbenpumpe eine elektrisch angetriebene Rotationspumpe eingesetzt wird.

Bei der Ausführungsform B mit die zentrale Bremsensteuerung M-ECU_{BM} ist vorzugsweise noch eine weitere Bremsanlage bzw. ein Steller für Bremskrafterzeugung für eine weitere Achse (Achse 1) vorgesehen. Dies kann ein identisches Modul sein, wie es Achse 2 versorgt, bzw. kann alternativ eine elektromechanische Bremse EMB oder eine über eine Druckversorgung hydraulisch unterstützte elektromechanische Bremse (H-EMB) sein, die in die in einer beispielhaften Ausführungsform in Fig. 3b näher beschrieben ist. Zudem kann auch Achse 2 wie Modul der Achse 1 ausgeführt sein. Jede Achse kann individuell konfiguriert werden und auch Teile der dargestellten Achslösungen enthalten (z.B. Verzicht auf Redundanzen bei Druckversorgung und in Reihe geschalteten Ventilen) und durch elektrische Servolenkung an einer oder beiden Achsen ergänzt werden. Die entsprechende Lösung wird durch Sicherheitsanforderungen gemäß Stufen des automatisierten Fahrens und den Fahrzeugtyp getrieben.

Die H-EMB wird über mit einer Druckversorgung DV2 mit einem Schaltventil verbunden. Mit dem Schaltventil kann der Druck gehalten werden oder es kann auch eine zweite H-EMB angeschlossen werden. Beide H-EMB werden im MUX-Betrieb oder im PPC-Verfahren mit optional PWM-Steuerung/Stromreglung der Magnetventile betrieben und können durch den Elektromotor der H-EMB alternativ oder simultan hydraulisch und elektrisch ein Bremsmoment erzeugen. Zudem kann durch das H-EMB-Modul die Parkbremse abgebildet werden, z.B. durch ein Getriebe mit Selbsthemmung und somit zudem eine Redundanz der radindividuellen Regelung durch hydraulische oder elektrische Betätigung der H-EMB erzeugt werden.

In einer Ausführung als H-EMB kann die Druckversorgung gegenüber der Achse 2 signifikant vereinfacht werden, da zur Bremskrafterzeugung ein Elektromotor des H-EMB -Moduls zusätzlich zur Verfügung steht. So kann die Kolbenpumpe (Kolben-Zylinder-Einheit) mit einem Kunststoffgehäuse versehen sein und/oder eine kostengünstige Trapezspindel eingesetzt werden. Das Drehmoment des Antriebsmotors kann zudem sehr gering dimensioniert werden. Auch hier ist der Einsatz einer kostengünstigen elektrischen Rotationspumpe als Druckversorgung möglich und vorteilhaft.

Eine derartige Lösung ist prädestiniert für eine E-Pedal-Lösung mit redundanter Datenleitung DS1 und DS2. Die Druckversorgung(en) DV1, DV2 dient bzw. dienen als Slave, welche über eine Steuer- und Regeleinheit M-ECU_{BM} angesteuert wird bzw. werden. Damit können alle Freiheitsgrade der Fahrdynamik (ABS/ESP-Regelung, Bremskrafterzeugung, Rekuperation über Traktionsmotoren, Lenkungseingriffe durch Bremse und/oder elektrischer Servolenkung, Torque-Vectoring über Bremse oder Traktionsmotoren) gesteuert werden, gleichzeitig sind alle Funktionen mit Leistungseinschränken redundant verfügbar.

**Figur 3b** zeigt eine Querschnittsdarstellung durch eine hydraulisch unterstützte elektromechanische Bremse H-EMB, welche über einen Hydraulikanschluss HL mit der Druckversorgungseinrichtung DV2 verbindbar ist, so dass entweder über die Hydraulik und/oder den Elektromotor EM eine Kraft auf die Bremsscheiben aufbringbar ist. Die rotatorische Bewegung des Elektromotors wird hierbei über ein Getriebe G in eine lineare Bewegung übertragen und erzeugt die Kraft F_{EM} auf die Radbremse. Das Getriebe G ist vorzugsweise selbsthemmend ausgeführt, so dass im Stillstand bei Ausfall des Bordnetzes die Parkbremse sicher funktioniert. Zusätzlich zum Elektromotor wird über die Druckversorgung eine hydraulische Kraft F_{hyd} erzeugt. Je nach Ausführung des EM als Bürstenmotor oder bürstenloser Motor mit geringer oder höherer Leistung, kann die Dynamik der Bremsmomentänderung und das zusätzlich verfügbare Bremsmoment durch die H-EMB durch entsprechende Gestaltung der Komponenten festgelegt werden und auf die hydraulische Bremse abgestimmt werden.

Die Druckversorgungseinrichtung DV2 ist als Alternative zur Kolbenpumpe (Figur 3a) hier als elektrische angetriebene Rotationskolbenpumpe RP ausgeführt. Die Rotationskolbenpumpe RP ist vorteilhaft derart aufgebaut wie in Figur 6a und Figur 6b ausgeführt.

Neben der Betätigung der Bremse ist es möglich, über ein Magnetventil KMV_{K1} mit der Druckversorgung eine Kupplung bzw. über zwei Magnetventile, bzw. getrennten Hydraulikleitungen auch 2 Kupplungen zu betätigen. Zwei Kupplungen K1, K2 sind beispielsweise für ein lastschaltfähiges Zwei-Ganggetriebe für einen E-Motor TM3 vorgesehen. Für den Druckabbau der Kupplung sind noch Magnetventile vorgesehen, die mit einem Vorratsbehälter zum Druckabbau verbunden sind und typischerweise als Proportionalventile oder Schaltventile ausgeführt werden. Beim Druckabbau wird typischerweise PWM-Betrieb eingesetzt. Typischerweise ist Achse 1 in diesem Fall die Hinterachse eines Kraftfahrzeuges. Die Betätigung der Bremse und Kupplung erfolgt vorzugsweise im MUX-Betrieb, da nicht gleichzeitig Gänge geschaltet werden. Zudem kann das PPC-Verfahren sowie PPC-Verfahren mit PWM/Stromsteuerung der Magnetventile als weiterer Freiheitsgrad auch hier eingesetzt werden. Sind unterschiedliche Hydraulikmedien für die Betätigung der H-EMB und der Kupplungen erforderlich, ist eine entsprechende Medientrennung vorzusehen. Dann erfolgt die Druckübertragung auf die Kupplung beispielweise über einen Medientrennkolben und das Kupplungssystem K1 und K2 wird mit einem separaten Vorratsbehälter versehen, aus dem Hydraulikfluid gezogen und rückgeführt wird. Auch sind Systemtrennmöglichkeiten, wie Bsp. in WO10037519_A2 ausgeführt, bzw. Einsatz von Speicherkammern möglich. Die Figur 3a zeigt daher nur die prinzipielle Ansteuerung von H-EMB und Kupplung und muss aus Sicherheitsgründen/Medientrennanforderungen ggf. erweitert werden.

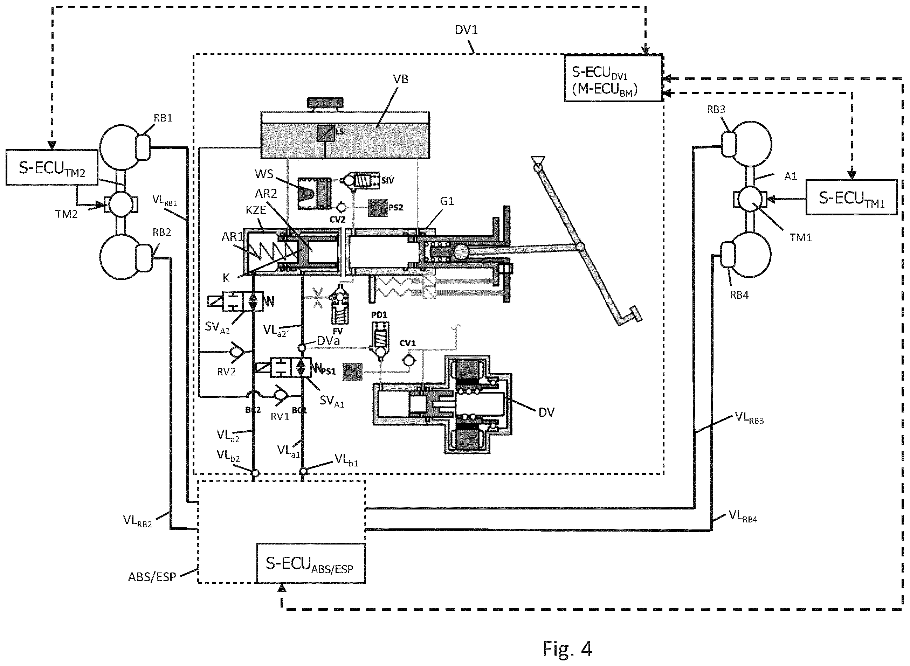

Die **Figur 4** zeigt eine Ausführungsform mit einem Bremskraftverstärker (X-Boost) gem. Fig. 1c, ergänzt um eine separat operierende ABS/ESP-Einheit, die an die Ausgangsleitung VL_{b1} und VL_{b2} angeschlossen ist. Die ABS/ESP-Einheit übernimmt die radindividuelle Regelung von Bremsdrücken bei ABS/ESP Fahrdynamikeingriffen, der Bremskraftverstärker (X-Boost) die Bremskraftverstärkung und die Blending-Funktion. Die EBV-Regelung bzw. achsweises ABS können in beiden Einheiten implementiert werden.

Der X-Boost entspricht weitestgehend dem Aufbau der Fig.1b und unterscheidet sich lediglich in zwei Punkten von diesem. So ist kein Betätigungsstössel STB vorgesehen, der eine mechanische Verbindung zwischen Druckkolben/Bremspedal und Schwimmkolben herstellt und somit bei Ausfall eines Bremskreises noch den notwendigen Durchgriff des Fahrers auf den anderen Bremskreis gewährleistet. Dies ist aufgrund der Redundanz der Druckversorgungen für viele Anwendungsfälle zulässig. Zudem sind Rückschlagventile RV1 und RV2 vorgesehen, um ein schnelles Ansaugen von Fluid aus dem Vorratsbehälter der ABS-Einheit bei Ausfall des X-Boost zu gewährleisten. Diese Ergänzung ist sehr empfehlenswert bei einer 2-Box-Bremssystemlösung. Gehäuse G1 und G2 sind getrennt und ermöglichen damit eine vorteilhafte Bauform gemäß Darstellung in Figur 8a.

Auch in dieser Ausführungsform werden die Komponenten des Fahrdynamiksystems sowie die Elektromotoren zentral über eine Steuer- und Regeleinrichtung M-ECU_{BM} gesteuert und auch die Steuer- und Regeleinrichtung S-ECU_{ESP/ABS} wird in die Steuerung eingebunden, z.B. für entsprechende Ventilbetätigung der Magnetventile der ABS/ESP-Einheit für die achsindividuelle Rekuperationssteuerung, welche primär über die M-ECU_{BM} gesteuert wird. So werden die Ventile SV_{A1} und SV_{A2} im Rekuperationsbetrieb bevorzugt verwendet, alternativ können aber auch Magnetventile der ABS/ESP-Einheit über die M-ECU_{BM} Sollstellsignale erhalten, sofern ein Zugriff auf die S-ECU_{ABS/ESP} möglich ist. Dies ist die weniger präferierte Lösung, da die ABS/ESP-Einheiten in der Regel geschlossene Systemarchitekturen von Tier1-Herstellern haben und ein Zugriff nur in enger Kooperation mit einem ABS/ESP-Hersteller möglich ist und zudem die Signalübertragung fehlerbehaftet ist. Daher sind in Sinne einer einfachen Struktur Funktionen der achsindividuellen Bremskraftsteuerung und Rekuperation primäre Masterfunktion des X-Boost und Regelfunktionen für ABS/ESP-Betrieb die primäre Funktion der ABS/ESP-Einheit.

**Die** **Figur 5** zeigt eine redundante Druckversorgung in der Ausführung als elektrische angetriebene Kolben-Zylinder-Einheit mit 2x3-Phasen und redundanten diagnostizierbare Dichtungen. Die Druckversorgungseinrichtung DV1 weist zwei Steuer- und Regeleinrichtungen DV-ECU1 und DV-ECU2 auf. Die Druckversorgungseinrichtung weist zudem einen Elektromotor M1 auf, dessen Rotor R eine Spindel SP verstellt, welche mit einem Kolben KB in Verbindung ist. Durch das Verstellen des Kolbens KB kann ein Druck im Druckraum DR aufgebaut werden, welche über das Trennventil TV in einen Bremskreis BK geleitet werden kann. Der Kolben ist über mehrere redundante Dichtungen im Zylinder abgedichtet, wobei wie bei der Betätigungseinheit BE ein redundantes diagnostizierbares Dichtungssystem geschaffen wird. Auch bei der Druckversorgungseinrichtung führt zwischen den Dichtungen je eine Hydraulikleitung zum Vorratsbehälter. Somit ist die Druckversorgung auch bei Ausfall einer Dichtung noch voll betriebsfähig und redundant. Die Erkennung des Ausfalles von Dichtungen erfolgt analog zum redundanten Hauptbremszylinder gemäß Fig. 2a. Über ein Rückschlagventil ist der Druckraum DR mit dem Vorratsbehälter verbunden. Somit kann die Druckversorgung nachfördern und damit kontinuierlich mit kurzer Zeitunterbrechung fördern. Jede der beiden Steuer- und Regeleinrichtungen DV-ECU1 und DV-ECU2 sind über 1x3 Phasenleitungen mit jeweils getrennten Wicklungs- bzw. Phasensystemen des Motors M1 in Verbindung, so dass bei Ausfall einer Steuer- und Regelungseinrichtung bzw. eines Wicklungssystem der Motor M1 noch über das andere Wicklungs- bzw. Phasensystem und die andere Steuer- und Regeleinrichtung betrieben werden kann, auch wenn dann nur noch ca. das halbe Drehmoment mittels des Antriebes M1 erzeugbar ist. Eine oder beide Steuer- und Regeleinrichtung(en) weist bzw. weisen Sensoren zur Ermittlung der Temperatur T, des Motorstroms i sowie des Rotorwinkels des Elektromotors α auf. Die Messdaten der Sensoren werden zur genauen PPC-Druckregelung bzw. auch für einen Betrieb bei Ausfall eines Druckgebers eingesetzt. Zur Erzielung einer hohen Verfügbarkeit sind die nicht nur Steuer- und Regeleinrichtungen DV-ECU redundant ausgebildet, sondern auch Stromversorgungen BN1, BN2 sowie Daten- und Steuerleitungen DS1 und DS2 doppelt vorgesehen. Die Stromversorgungen BN1 und BN2 können z.B. unterschiedliche Spannungsniveaus eines Bordnetzes oder getrennte Bordnetze sein.

Die **Figuren 6 und 6a** zeigen mögliche Ausbildungen der Druckversorgung mit einer Rotationspumpe. Die **Figur 6** zeigt eine Darstellung der gesamten Baueinheit bestehend aus Motor 22, Pumpe Z, HCU und ECU, welche in der Lage ist, die Druckregelung und Steuerung für Bremssysteme auszuüben. Hierbei soll im Wesentlichen die Kombination Motor mit Pumpe dargestellt werden. Im Lagerflansch 18 ist die Pumpe angeordnet oder in einem separaten Pumpengehäuse 40, wie es in der oberen Bildhälfte dargestellt ist an HCU oder ECU befestigt. Die HCU umfasst Magnetventile und Druckgeber, die für die jeweilige Lösung erforderlich. So sind in der Ausführung nach Fig. 3c und Fig. 3b die Magnetventile sowie Druckgeber DG in der HCU integriert. Die HCU kann auch Hydraulikkomponenten und Sensoren für die Betätigung für Kupplungen (Magnetventile, Druckgeber) enthalten. Der Motor setzt sich wie üblich zusammen aus Rotor 21, welcher über den Mitnehmer 10a mit der Welle 1 verbunden ist. Der Rotor 21 wird über einen Permanentmagneten im Gehäuse 30 durch seine Kraft axial vorgespannt. Dies ist eine Lösung für den Motorhersteller, welcher Motor mit Gehäuse 22 und Stator und Wicklung 23 fertigt, prüft und an den Systemlieferanten zuliefert. Hierbei wird der Motor ohne Pumpe mit einer Hilfswelle geprüft. Danach wird bei Ausbau der Welle der Rotor durch die axiale Magnetkraft zentriert, so dass anschließend bei der Endmontage die Welle 1 mit dem Rotor zusammengebaut werden kann. Das Antriebsgehäuse muss hier zusätzlich mit dem Flansch 18 bei 25a - in der unteren Bildhälfte dargestellt - zusammengefügt und befestigt werden, z. B. mit Federn, welche segmentförmig über drei Verbindungen aufgesteckt werden. Hierbei ist auch eine Gehäusedichtung 31 notwendig. Die Befestigung kann durch Verstemmen, bei 25 von Motorflansch mit HCU oder ECU, siehe obere Bildhälfte 28, erfolgen. Hier ist die Version Pumpe mit Pumpengehäuse dargestellt. Der Motor ist hier als bürstenloser Motor dargestellt, der einen Motorsensor für die Kommutierung und Steuerung der Volumenförderung der Pumpe braucht. Dieser Motorsensor ist entfernt vom Antriebsgehäuse 22 angeordnet, wobei eine Sensorwelle 26, welche an der Antriebswelle 1 angeordnet bzw. befestigt ist, ein Sensortarget 27 trägt. Dieses Target 27 wirkt auf das Sensorelement 28, welches auf der Leiterplatte der ECU angeordnet ist. Die Wicklung ist über Kontaktschienen 24 mit der ECU verbunden.

Der Motor mit Lagerflansch 18 kann direkt mit dem Hydraulikgehäuse HCU, welches Ventile oder sonstige hydraulische Komponenten beinhaltet, mit der Pumpe verbunden werden. Wenn dies nicht der Fall ist, so bietet sich eine Verbindung des Antriebsgehäuses 22, 18 direkt mit dem Gehäuse der ECU an.

Es ist ebenso möglich, die Zahnradpumpe Z in einem Pumpengehäuse 40 anzuordnen, welches direkt mit Hydraulikgehäuse HCU verbunden wird, wie es in Figur 5 in der oberen Hälfte der Antriebswelle 1 dargestellt ist. Vor dem Zusammenbau von Pumpengehäuse 40 und Hydraulikgehäuse HCU bzw. Pumpengehäuse 40 und ECU wird zunächst die Zahnradpumpe Z im Pumpengehäuse 40 integriert bzw. montiert, wobei anschließend der Rotor 21 auf die Welle 1 aufgepresst und anschließend mit dem Lager 20 zusammengebaut wird. Hierbei kann die Zugkraft des Magneten 30 zusätzlich auf den Rotor 21 und das Lager 20 wirken, womit das Lager wie ein Vierpunktlager wirkt. Damit ist das Motorgehäuse 22 mit der Zahnradpumpe Z und deren Pumpengehäuse 40 verbunden und kann im nächsten Schritt mit dem Hydraulikgehäuse HCU bzw. dem Elektronikgehäuse ECU verbunden werden. Dazu wird die Befestigungsschraube 41 verwendet. Die Welle 1 ist zuvor in den Außenscheiben 7.1 und 7.2 zentriert, so dass das Pumpengehäuse 40 vor der Verschraubung mit dem Hydraulikgehäuse HCU bzw. dem Elektronikgehäuse ECU mit der Welle 1 zentriert ist.

Die Druckversorgungseinrichtung gemäß **Fig. 6a** verwendet eine 2-stufige Pumpe mit langer Gleit- oder Wälzlagerung entsprechend Fig. 2 und 4, welche keine getrennte Motorlagerung erfordert. Dementsprechend ist der Motoraufbau mit Gehäuse vereinfacht. Der Rotor 21 sitzt mit Mitnehmer 10a auf der Motorwelle und ist axial mit dem Sicherungsring verbunden. Das Pumpengehäuse ragt hier etwas in die HCU hinein.

Die **Figur 7a** zeigt eine Druckaufbauregelung mit PPC-Regelung und mit zusätzlich PWM-Steuerung eines Magnetventils, das Druckversorgung mit den hydraulischen Verbraucher, hier für Hinterachse und Vorderachse verbindet.

Der Druckaufbau der Vorderachse erfolgt durch genaue Vordrucksteuerung über das PPC-Verfahren mit Drucksignal als Regelgröße oder Nutzung von Strom i, Temperatur T und Winkelposition α. Das Magnetventil ist hier konstant geöffnet. Hierdruck kann der Vordruck sehr genau im zeitlichen Verlauf geregelt werden und der Druck p_{VA} der Vorderachse gestellt werden. Die genaue Druckregelung sowie der zeitliche Druckverlauf ist insbesondere wichtig für eine sehr genaue Abstimmung auf das Bremsmoment des elektrischen Traktionsmotors TM. Zeitgleich wird die Hinterachse im Druckverlauf über den Vordruck der Druckversorgung p_{DV1} und Öffnungsquerschnitt des Magnetventils über PWM-Steuerung bzw. Stromregelung des Kugelsitzventiles geregt. Die unterschiedlichen Druckverläufe werden eingesetzt, um zeitgleich die Druckverläufe an den Achsen zu variieren (EBV-Funktion) bzw. auf die Rekuperation von einem Traktionsmotor an einer Achse oder Rekuperation mit 2 Traktionsmotoren an 2 Achsen, die unterschiedliche Bremsmomente erzeugen, optimal zu regeln.

Die **Figur 7b** zeigt eine Druckabbauregelung mit PPC-Regelung und mit zusätzlich PWM-Steuerung eines Ventils, das die Druckversorgung DV1 mit VA verbindet. Die Druckabbauregelung folgt der gleichen Logik wie die Druckaufbauregelung in Figur 7a mit dem Unterschied, dass die Achse, die mit einem höheren Druck betrieben wird, einen geringeren Öffnungsquerschnitt erfordert.

In diesem Fall wird das Magnetventil der Vorderachse PWM-geregelt bzw. stromgeregelt.

Die **Figur 7c** zeigt wiederum eine Multiplexregelung (MUX-Regelung) mit der der Bremsdruck in den beiden Bremskreisen individuell alternierend, das heißt nacheinander in kleinen Schritten kann oder aber auch gleichzeitig verändert werden kann. Hier wird der Druck nacheinander geregelt, was zu einem Zeitverzug ΔtMux führt, der jedoch so gering ist, dass kaum oder keine Einschränkung der Funktion gegeben ist. Um dies nicht für den Fahrer spürbar zu gestalten ist, ist der Druckregelung entweder sehr schnell nacheinander durchzuführen oder Drehmomentregelung der Traktionsmotoren anzupassen. Alternativ kann die MUX-Regelung, wie nach dem Stand der Technik bekannt, auch simultan bzw. teilsimultan erfolgen. Dies führt zu etwas höheren Geräuschen, was in Fahrbetriebszuständen, wo dies erforderlich ist, mit Verzögerung mit 1g, jedoch als unkritisch betrachtet wird.

Die Figuren 8a bis 9b zeigen verschiedene mögliche Modulbauweisen, d.h. Anordnungen der einzelnen Komponenten des erfindungsgemäßen Bremssystems zueinander für verschiedene Ausbildungen des Bremssystems.

Die Figur 8a zeigt eine erste mögliche Ausbildung des erfindungsgemäßen Bremssystems als Modul bzw. Baueinheit MO, wobei die Ventileinheit HCU und die Betätigungseinheit BE in getrennten Gehäusen G_{HCU} und G_{BE} angeordnet sind, welche entweder aneinander liegend oder wie in Figur 8b dargestellt, getrennt voneinander angeordnet sind. Die Motorachse des Antriebs der Druckversorgungseinrichtung bzw. sofern vorhanden die Achse A der Kolben-Zylinder-Einheit der Druckversorgung DV ist parallel zu der Achse der Kolben-Zylinder-Einheit der Betätigungseinheit BE ausgerichtet. Diese Bauweise kann insbesondere für die Ausführungsformen des Bremssystems gemäß den Figuren 1b und 4 eingesetzt werden. Die Ventilanordnung HCU kann alle Magnetventile, Druckgeber DG und/oder Kolben, insbesondere Schwimmkolben, der Druckversorgung DV umfassen. Der Wegsimulator WS kann entweder ganz oder teilweise im Gehäuse G_{BE} der Betätigungseinheit BE oder des Gehäuses G_{HCU} der Ventilanordnung HCU sein. Dieser Aufbau ist im Hinblick auf ein sehr kostengünstiges Herstellverfahren des Hydraulikblocks der Ventilanordnung HCU sinnvoll, wobei das Herstellungsverfahren die Extrusion-Technik von modernen ESP/ABS-Anlagen nutzen kann.

Durch die Anordnung von Ventilanordnung und Betätigungseinheit in getrennten Gehäusen ist die Betätigungseinheit von dem Modul bzw. der Baueinheit abnehmbar und kann von diesem getrennt werden.

Die Figur 8b zeigt die Anordnung gemäß der Figur 8a, wobei jedoch das Bremssystem ein E-Pedal aufweist, welches Bestandteil der von der Baueinheit bzw. des Moduls MO getrennt angeordneten Betätigungseinheit BE ist. Die Betätigungseinheit BE ist über Daten- und Signalleitungen DS1, DS2 mit dem Modul MO in Verbindung. Eine hydraulische Verbindung besteht nicht.

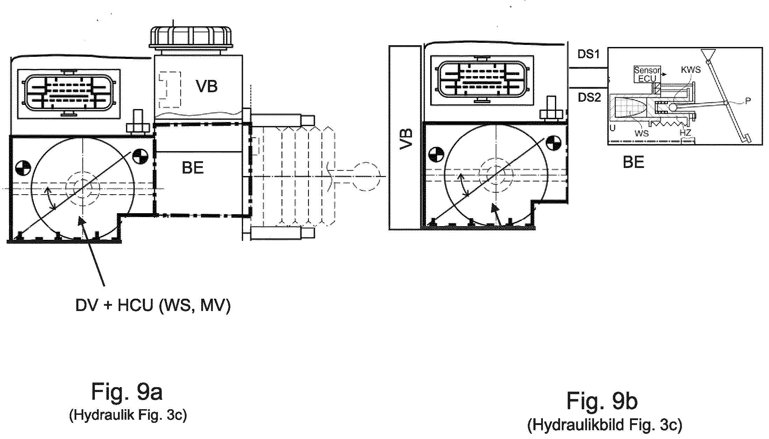

Die Figur 9a und 9b zeigen ähnliche Modul bzw. Baueinheiten MO, wie sie in den Figuren 8a und 8b dargestellt und beschrieben sind, mit dem Unterschied, dass die Druckversorgung DV anstelle einer Kolben-Zylinder-Einheit eine Rotationspumpe ZRP aufweist. Bei der Ausführungsform der Figur 9a ist die Achse des die Rotationspumpe antreibenden Motors quer zur Achse der Kolben-Zylinder-Einheit der Betätigungseinrichtung BE ausgerichtet bzw. angeordnet. Dabei kann das Bremssystem gemäß der Figur 2c ausgebildet sein. Die Ausbildung der Rotationspumpe ZRP kann wie in den Figuren 6a oder 6b dargestellt gewählt werden. Die Hydraulik, kann dabei wie in Figur 3 beschrieben ausgebildet sein. Dies führt dann zu der Baueinheit 10b mit separaten E-Pedal.

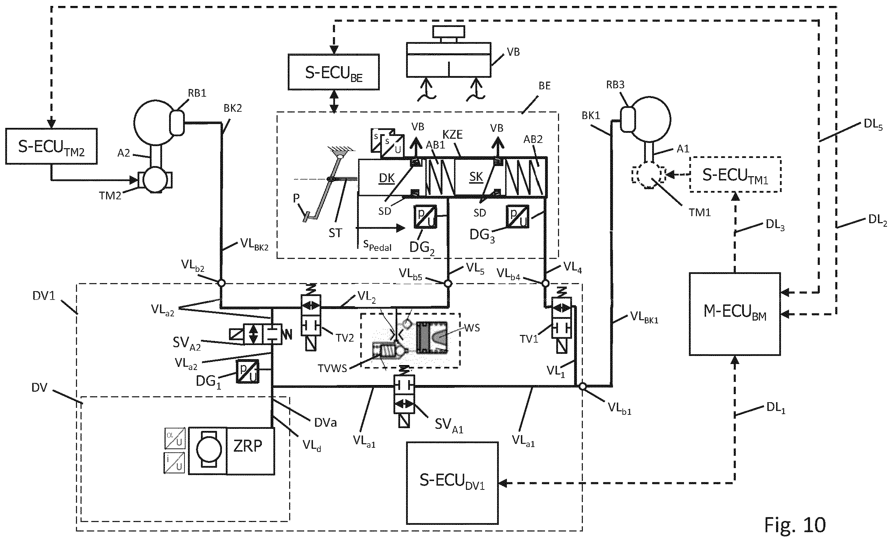

Die Figur 10 zeigt das Fahrdynamiksystem für ein Zweirad, bei der das Fahrzeug lediglich ein Rad pro Achse aufweist. Die Radbremsen RB1 und RB2 sind jeweils einem Bremskreis BK1 und BK2 zugeordnet, welche mittels der Druckruckversorgungseinheit DV1, vorzugsweise in Form einer kostengünstigen Rotationspumpe, über die Schaltventile SV_{A1} und SV_{A2} versorgt werden. Ansonsten entspricht der Aufbau des Bremssystems dem der Figur 1. Alternativ und bevorzugt kann für Zweiräder, insbesondere weniger stark motorisierte E-Scooter oder Elektro-Pedelecs mit geringeren Endgeschwindigkeiten, die in Figur 2c ausgeführte kostengünstigere hydraulische Schaltung mit weniger Ventilen und Betätigungseinheit mit einer einkreisigen Einspeisung über die Betätigungseinheit BE in die Vorderradbremse ausgeführt sein, wobei das Hinterrad über nur einen elektrischen Traktionsmotor angetrieben und verzögert wird.

## Patentansprüche

1. Fahrdynamiksystem, umfassend:
- eine erste Achse (A1) und eine zweite Achse (A2) mit Rädern;
- mindestens einen elektrischen Traktionsmotor (TM1, TM2) zum Antrieb und Bremsen mindestens eines der Räder;
- hydraulische Radbremsen (RB1, RB2, RB3, RB4) zum Bremsen der Räder;
- mindestens eine Druckversorgungseinrichtung (DV1) mit einer Druckversorgung (DV) mit einer von einem Elektromotor (M) angetriebenen Kolben-Zylinder-Einheit (KZE) oder einer Rotationspumpe (ZRP), wobei die Druckversorgung (DV) dazu ausgebildet ist, Druck aufzubauen;
- ein Software-Modul umfassend ein zentrales Bremsenmanagement (BM), das den mindestens einen elektrischen Traktionsmotor (TM1, TM2) sowie die Druckversorgungseinrichtung (DV1) derart steuert, dass in Zusammenspiel der Druckversorgungseinrichtung (DV1) und dem mindestens einen elektrischen Traktionsmotor (TM1, TM2) für mindestens jede Achse (A1, A2) und/oder für jede Radbremse (RB1, RB2, RB3, RB4) individuell eine Bremsverzögerung einregelbar ist;
- Magnetventile zur radindividuellen Regelung von mindestens zwei Rädern der ersten Achse (A1) und/oder der zweiten Achse (A2), wobei die Magnetventile in jeweiligen Verbindungsleitungen zwischen der Druckversorgungseinrichtung (DV1) und einer jeweiligen Radbremse (RB1, RB2, RB3, RB4) angeordnet sind;
**dadurch gekennzeichnet, dass**
das zentrale Bremsenmanagement (BM) zusätzlich dazu ausgelegt ist, ein Torque-Vektoring unter Verwendung einer elektrischen Servolenkung (EPS) sowie unter Verwendung von
- mindestens einer der hydraulischen Radbremsen (RB1, RB2, RB3, RB4); und/oder
- dem mindestens einen Traktionsmotor (TM)
durchzuführen.

2. Fahrdynamiksystem nach einem der vorhergehenden Ansprüche,
wobei mittels des Traktionsmotors (TM1, TM2) beim Bremsen Energie rückgewinnbar ist.

3. Fahrdynamiksystem nach einem der vorhergehenden Ansprüche,
wobei die Druckversorgung (DV) dazu ausgebildet ist, sowohl Druck aufzubauen als auch Druck abzubauen.

4. Fahrdynamiksystem nach einem der vorherigen Ansprüche,
wobei durch das zentrale Bremsenmanagement (BM) bei gleichzeitiger Rekuperation eine elektrische Bremskraftverteilung (EBV) zwischen der ersten und der zweiten Achse (A1, A2) implementiert wird.

5. Fahrdynamiksystem nach einem der vorherigen Ansprüche,
das ferner das Folgende aufweist:
- einen ersten Bremskreis (BK1) mit einer ersten Verbindungsleitung (VLa1) zur Versorgung des ersten Bremskreises (BK1), wobei die erste Verbindungsleitung (VLa1) zumindest ein erstes Schaltventil (SVa1), insbesondere ein erstes erstes Schaltventil (SVa1) und ein zweites erstes Schaltventil (SVA1,r), zum wahlweisen Verschließen und Öffnen der ersten Verbindungsleitung (VLa1) aufweist; und
- einen zweiten Bremskreis (BK2) mit einer zweiten Verbindungsleitung (VLa2) zur Versorgung des zweiten Bremskreises (BK2), wobei die zweiten Verbindungsleitung (VLa2) zumindest ein zweites Schaltventil (SVa2), insbesondere ein erstes zweites Schaltventil (SVa1) und ein zweites zweites Schaltventil (SVa2,r), zum wahlweisen Verschließen und Öffnen der zweiten Verbindungsleitung (VLa2) aufweist,
wobei eine Vordrucksteuerung über die Druckversorgung (DV) ausgelegt ist, den Druck in dem ersten Bremskreis (BK1) über das zumindest eine erste Schaltventil (SVa1) anzusteuern, wobei das zumindest eine erste Schaltventil (SVa1) geöffnet ist und in dem zweiten Bremskreis (BK2) das zumindest eine zweite Schaltventil (SVa2) anzusteuern, insbesondere pulsweitenmoduliert oder stromgeregelt.

6. Fahrdynamiksystem nach einem der vorhergehenden Ansprüche,
**dadurch gekennzeichnet, dass**
die Druckversorgungseinrichtung (DV1) in einem ersten Gehäuse und eine Betätigungseinheit (BE) mit einem Bremspedal (P) in einem zweiten Gehäuse, insbesondere in Form einer hydraulischen Betätigungseinheit mit einem Wegsimulator (WS) oder einem E-Pedal (EP) vorgesehen ist.

7. Fahrdynamiksystem nach einem der vorhergehenden Ansprüche, insbesondere nach Anspruch 6,
**dadurch gekennzeichnet, dass**
die Bremskraft an den Achsen (A1, A2) im Zusammenwirken des Druckes der Druckversorgungseinrichtung (DV1) und/oder der Betätigungseinheit (BE) mit dem Bremsmoment des mindestens einen elektrischen Traktionsmotors (TM1, TM2) erzeugt wird, wobei eine Steuer- und Regeleinrichtung (ECU_{BM}) die Komponenten derart, dass die Bremsverzögerung bei niedrigen Fahrzeuggeschwindigkeiten (<120 km/h) vorzugsweise ausschließlich oder größtenteils (>2/3 der Verzögerung) mittels des elektrischen Traktionsmotors (TM) erfolgt, derart, dass möglichst viel kinetische Energie des Fahrzeuges in elektrische Energie umwandelbar und speicherbar ist.

8. Fahrdynamiksystem nach einem der vorhergehenden Ansprüche,
**dadurch gekennzeichnet, dass**
die Druckversorgungseinrichtung (DV1) mindestens zwei Ausgangsleitungen (VLₐ₁, VLₐ₂) und mindestens zwei Anschlüsse (VL_{b1}, VL_{b2}) zum Anschluss entweder an die Bremskreise (BK1, BK2), eine ABS/ESP-Einheit (ABS/ESP) und/oder eine Betätigungseinheit (BE) aufweist.

9. Fahrdynamiksystem nach einem der vorhergehenden Ansprüche,
**dadurch gekennzeichnet, dass**
zwei Schaltventile (SV_{A1}, SV_{A2}) zwischen Druckraum der Druckversorgung (DV) und Ausgangsanschluss (VL_{b1}, VL_{b2}) vorgesehen ist, sodass mittels der Schaltventile (SV_{A1}, SV_{A2}) und der Druckversorgungseinrichtung (DV1) (z.B. über PPC-Druckverlaufsregelverfahren) eine bremskreisindividuelle Druckregelung erfolgt (z.B. EBV-Funktion, 2-Kanal-ABS).

10. Fahrdynamiksystem nach einem der vorhergehenden Ansprüche, insbesondere nach Anspruch 5,
**dadurch gekennzeichnet, dass**
zwischen der Druckversorgungseinrichtung (DV1) und den Bremskreisen (BK1, BK2) eine ABS/ESP-Einheit zwischengeschaltet ist, wobei die ABS/ESP-Einheit mit ihren Eingängen mit den Anschlüssen (VL_{b1}, VL_{b2}) verbunden ist.

11. Fahrdynamiksystem nach einem der vorhergehenden Ansprüche,
**dadurch gekennzeichnet, dass**
das Software-Modul ausgelegt ist, das zumindest eine erste Schaltventil und/oder das zumindest eine zweite Schaltventil, zu steuern und/oder zu regeln.

12. Fahrerloses Fahrzeug mit einem Fahrdynamiksystem nach einem der Ansprüche 1-11,
**dadurch gekennzeichnet, dass**
keine Betätigungseinheit (BE) vorgesehen ist und das Fahrdynamiksystem im AD-Ctrl-Betrieb betrieben wird.

13. Rennsportfahrzeug mit einem Fahrdynamiksystem nach einem der Ansprüche 1-11,
**gekennzeichnet durch**
eine hochdynamische und präzise achsweise Bremsmomentregelung für eine EBV-Optimierung sowie gleichzeitige Rekuperation über mindestens einen Elektromotor an einer oder zwei Achsen.

14. Elektrofahrzeug mit einem Fahrdynamiksystem nach einem der Ansprüche 1-11.

15. Verfahren zum Betrieb eines Torque-Vektoring in einem Fahrdynamiksystem nach einem der Ansprüche 1 bis 11,
umfassend die folgenden Schritte:
- Ansteuern einer elektrischen Servolenkung (EPS);
- Ansteuern mindestens einer hydraulischen Radbremsen (RB1, RB2, RB3, RB4) und/oder mindestens eines Traktionsmotors (TM).

## Claims

1. A driving dynamics system comprising:
- a first axle (A1) and a second axle (A2) with wheels;
- at least one electric traction motor (TM1, TM2) for driving and braking at least one of the wheels;
- hydraulic wheel brakes (RB1, RB2, RB3, RB4) for braking the wheels;
- at least a pressure supply device (DV1) with pressure supply (DV), comprising a piston-cylinder unit (KZE) which is driven by an electric motor (M) or a rotary pump, wherein the pressure supply is designed to build up pressure;
- a software module comprising a central brake management (BM) which controls the at least one electric traction motor (TM1, TM2) and the pressure supply device (DV1) such that by interaction of the pressure supply device (DV1) and the at least one electric traction motor (TM1, TM2), a braking deceleration can be set individually for at least each axle (A1, A2) and/or for each wheel brake (RB1, RB2, RB3, RB4);
- solenoid valves for individual wheel control of at least two wheels of the first axle (A1) and/or the second axle (A2),
wherein the solenoid valves are arranged in respective connecting lines between the pressure supply device (DV1) and a respective wheel brake (RB1, RB2, RB3, RB4);
**characterized in that**
the central brake management (BM) is additionally configured to perform torque vectoring using an electric power steering (EPS) and using
- at least one of the hydraulic wheel brakes (RB1, RB2, RB3, RB4);
and/or
- the at least one traction motor (TM).

2. The driving dynamics system according to one of the preceding claims, wherein energy can be recovered by means of the traction motor (TM1, TM2) during braking.

3. The driving dynamics system according to one of the preceding claims, wherein the pressure supply (DV) is configured to both build up pressure and reduce pressure.

4. The driving dynamics system according to one of the preceding claims, wherein with simultaneous recuperation, an electric braking force distribution (EBV) is implemented between the first and the second axle (A1, A2) via the central brake management (BM).

5. The driving dynamics system according to one of the preceding claims, further comprising the following:
- a first brake circuit (BK1) with a first outlet line (VLa1) for supplying the first brake circuit (BK1), wherein the first outlet line (VLa1) comprises at least one first switching valve (SVa1), in particular a first first switching valve (SVa1) and a second first switching valve (SVa1,r) for selectively opening and closing the first outlet line (VLa1); and
- a second brake circuit (BK2) with a second outlet line (VLa2) for supplying the second brake circuit (BK2), wherein the second outlet line (VLa2) comprises at least one second switching valve (SVa2), in particular a first second switching valve (SVa2) and a second second switching valve (SVa2,r) for selectively opening and closing the second outlet line (VLa2), wherein a pre-pressure control is configured through the pressure supply (DV) to control the pressure in the first brake circuit (BK1) by the at least one first switching valve (SVa1), wherein the at least one first switching valve (SVa1) is open, and to control the at least one second switching valve (SVa2) in the second brake circuit (BK2), in particular by pulsewidth modulation or by current control.

6. The driving dynamics system according to one of the preceding claims,
**characterized in that**
the pressure supply device (DV1) is provided in a first housing and an actuating device (BE) with a brake pedal (P) is provided in a second housing, in particular in the form of a hydraulic actuating unit with a travel simulator (WS) or an electric pedal (EP).

7. The driving dynamics system according to one of the preceding claims, in particular claim 6,
**characterized in that**
the braking force at the axles (A1, A2) is generated by the interaction of the pressure of the pressure supply device (DV1) and/or of the actuating unit (BE) with the braking torque of the at least one electric traction motor (TM1, TM2), wherein the open-loop and closed-loop control device (ECU_{BM}) controls the components such that the braking deceleration at low vehicle speeds (<120 km/h) is implemented preferably exclusively or largely (>2/3 of the deceleration) by means of the electric traction motor (TM), such that as much kinetic energy of the vehicle as possible can be converted into electrical energy and stored.

8. The driving dynamics system according to one of the preceding claims, **characterized in that** the pressure supply device (DV1) has at least two outlet lines (VLa1, VLa2) and at least two connections (VLb1, VLb2) either to the brake circuits (BK1, BK2), an ABS/ESP unit (ABS/ESP) and/or an actuating unit (BE).

9. The driving dynamics system according to one of the preceding claims,
**characterized in that**
two switching valves (SVa1, SVa2) are provided between the pressure chamber of the pressure supply (DV) and the output connection (VLb1, VLb2) so that by means of the switching valves (SVa1, SVa2) and the pressure supply device (DV1) (e.g. by PPC pressure progression closed-loop methods), an individual braking circuit pressure closed-loop control is conducted (e.g. EBV-functions, 2-channel-ABS).

10. The driving dynamics system according to one of the preceding claims, in particular claim 5,
**characterized in that**
an ABS/ESP unit is interconnected between the pressure supply device (DV1) and the brake circuits (BK1, BK2), wherein the ABS/ESP unit is connected by way of its inlets to the connections (VLb1, VLb2).

11. The driving dynamics system according to one of the preceding claims, **characterized in that** the software-module is configured such that it open-loop controls and/or closed-loop controls the at least one first switching valve and/or the at least one second switching valve.

12. Driverless vehicle with a driving dynamics system as claimed in any one of claims 1-11, **characterized in that** no actuating unit (BE) is provided and that the driving dynamics system is operated in AD-Ctrl-Operation.

13. Race car vehicle with a driving dynamics system as claimed in any one of claims 1-11, **characterized by** an EBV-optimization and simultaneous recuperation through at least one electric motor at one or two axles by a highly dynamical and precise braking torque closed-loop control for each axle.

14. Electric vehicle with a driving dynamics system as claimed in any one of claims 1-11.

15. A method for operating torque vectoring in a driving dynamics system according to any one of claims 1-11, comprising the following steps:
- controlling an electric power steering system (EPS);
- controlling at least one hydraulic wheel brake (RB1, RB2, RB3, RB4) and/or at least one traction motor (TM).

## Revendications

1. Système de dynamique du véhicule, comprenant :
- un premier essieu (A1) et un deuxième essieu (A2) munis de roues ;
- au moins un moteur de traction électrique (TM1, TM2) pour l'entraînement et le freinage d'au moins une des roues ;
- des freins de roue hydrauliques (RB1, RB2, RB3, RB4) pour le freinage des roues ;
- au moins une installation d'alimentation en pression (DV1) avec une alimentation en pression (DV) comprenant une unité de vérin (KZR) entraînée par un moteur électrique ou une pompe rotative (ZRP), laquelle alimentation en pression (DV) est conçue pour constituer une pression ;
- un module logiciel comprenant une fonction centrale de gestion du freinage (BM) qui régule l'au moins un moteur de traction électrique (TM1, TM2) et l'installation d'alimentation en pression (DV1) de telle sorte qu'une décélération par freinage peut être ajustée individuellement par la coopération de l'installation d'alimentation en pression (DV1) et de l'au moins un moteur de traction électrique (TM1, TM2) pour au moins chaque essieu (A1, A2) et/ou pour chaque frein de roue (RB1, RB2, RB3, RB4) ;
- des électrovannes pour la régulation individuelle à la roue d'au moins deux roues du premier essieu (A1) et/ou du deuxième essieu (A2), lesquelles électrovannes sont disposées dans des conduites de communication respectives entre l'installation d'alimentation en pression (DV1) et un frein de roue (RB1, RB2, RB3, RB4) correspondant,
**caractérisé en ce que** la fonction centrale de gestion du freinage (BM) est en outre conçue pour exécuter une vectorisation du couple en utilisant une direction assistée électrique (EPS) et en utilisant
- au moins un des freins de roue hydrauliques (RB1, RB2, RB3, RB4) et/ou
- l'au moins un moteur de traction (TM).

2. Système de dynamique du véhicule selon l'une des revendications précédentes, dans lequel de l'énergie peut être récupérée lors du freinage au moyen du moteur de traction (TM1, TM2).

3. Système de dynamique du véhicule selon l'une des revendications précédentes, dans lequel l'alimentation en pression (DV) est conçue aussi bien pour constituer une pression que pour réduire une pression.

4. Système de dynamique du véhicule selon l'une des revendications précédentes, dans lequel la fonction centrale de gestion du freinage (BM) réalise, en même temps que la récupération, une répartition de l'effort de freinage électrique (EBV) entre le premier essieu et le deuxième (A1, A2).

5. Système de dynamique du véhicule selon l'une des revendications précédentes, comprenant en outre ce qui suit :
- un premier circuit de freinage (BK1) muni d'une première conduite de communication (VLa1) pour l'alimentation du premier circuit de freinage (BK1), laquelle première conduite de communication (VLa1) comprend au moins une première vanne de commutation (SVa1), en particulier une première première vanne de commutation (SVa1) et une deuxième première vanne de commutation (SVA1,r), pour la fermeture et l'ouverture sélectives de la première conduite de communication (VLa1), et
- un deuxième circuit de freinage (BK2) muni d'une deuxième conduite de communication (VLa2) pour l'alimentation du deuxième circuit de freinage (BK2), laquelle deuxième conduite de communication (VLa2) comprend au moins une deuxième vanne de commutation (SVa2), en particulier une première deuxième vanne de commutation (SVa1) et une deuxième deuxième vanne de commutation (SVa2,r), pour la fermeture et l'ouverture sélectives de la deuxième conduite de communication (VLa2),
dans lequel une commande de pression d'alimentation via l'alimentation en pression (DV) est conçue pour réguler la pression dans le premier circuit de freinage (BK1) à l'aide de l'au moins une première vanne de commutation (SVa1) en ouvrant l'au moins une première vanne de commutation (SVa1) et activer dans le deuxième circuit de freinage (BK2) l'au moins une deuxième vanne de commutation (SVa2), en particulier avec une modulation de la durée d'impulsion ou une régulation de l'intensité.

6. Système de dynamique du véhicule selon l'une des revendications précédentes, **caractérisé en ce que** l'installation d'alimentation en pression (DV1) est prévue dans un premier boîtier et une unité d'actionnement (BE) avec une pédale de frein (P) dans un deuxième boîtier, en particulier sous la forme d'une unité d'actionnement hydraulique avec un simulateur de course (WS) ou une pédale électrique (EP).

7. Système de dynamique du véhicule selon l'une des revendications précédentes, en particulier selon la revendication 6, **caractérisé en ce que** l'effort de freinage aux essieux (A1, A2) est produit par la coopération de la pression de l'installation d'alimentation en pression (DV1) et/ou de l'unité d'actionnement (BE) avec le moment de freinage de l'au moins un moteur de traction électrique (TM1, TM2), une installation de commande et de régulation (ECU_{BM}) [commandant] les composants de telle sorte que la décélération par freinage à petite vitesse de marche (< 120 km/h) soit exécutée exclusivement ou en majeure partie (> 2/3 de la décélération) au moyen du moteur de traction électrique (TM), de sorte qu'un maximum de l'énergie cinétique du véhicule puisse être convertie en énergie électrique et stockée.

8. Système de dynamique du véhicule selon l'une des revendications précédentes, **caractérisé en ce que** l'installation d'alimentation en pression (DV1) comporte au moins deux conduites de sortie (VLₐ₁, VLₐ₂) et au moins deux raccords (VL_{b1}, VL_{b2}) pour se raccorder soit aux circuits de freinage (BK1, BK2), soit à une unité d'ABS/ESP (ABS/ESP) et/ou à une unité d'actionnement (BE).

9. Système de dynamique du véhicule selon l'une des revendications précédentes, **caractérisé en ce que** deux vannes de commutation (SV_{A1}, SV_{A2}) sont prévues entre l'espace sous pression de l'alimentation en pression (DV) et le raccord de sortie (VL_{b1}, VL_{b2}), de telle sorte qu'une régulation individuelle par circuit de freinage (p. ex. fonction de répartition électronique de l'effort de freinage, ABS bicanal) est réalisée au moyen des vannes de commutation (SVa1, SV_{A2}) et de l'installation d'alimentation en pression (DV1) (p. ex. par un procédé PPC de régulation de la courbe de pression).

10. Système de dynamique du véhicule selon l'une des revendications précédentes, en particulier selon la revendication 5, **caractérisé en ce qu'**une unité d'ABS/ESP est intercalée entre l'installation d'alimentation en pression (DV1) et les circuits de freinage (BK1, BK2), laquelle unité d'ABS/ESP est reliée par ses entrées aux raccords (VL_{b1}, VL_{b2}).

11. Système de dynamique du véhicule selon l'une des revendications précédentes, **caractérisé en ce que** le module logiciel est conçu pour commander et/ou réguler l'au moins une première vanne de commutation et/ou l'au moins une deuxième vanne de commutation.

12. Véhicule sans conducteur muni d'un système de dynamique du véhicule selon l'une des revendications 1 à 11, **caractérisé en ce qu'**aucune unité d'actionnement (BE) n'est prévue et **en ce que** le système de dynamique du véhicule est exploité en mode AD-Ctrl.

13. Véhicule de course avec un système de dynamique du véhicule selon l'une des revendications 1 à 11, **caractérisé en ce qu'**il comporte une régulation à l'essieu précise et de haute dynamique du couple de freinage en vue d'une optimisation de l'EBV et d'une récupération simultanée par au moins un moteur électrique sur un ou deux essieux.

14. Véhicule électrique muni d'un système de dynamique du véhicule selon l'une des revendications 1 à 11.

15. Procédé de conduite d'une vectorisation du couple dans un système de dynamique du véhicule selon l'une des revendications 1 à 11, comprenant les étapes suivantes :
- activation d'une commande assistée électrique (EPS) ;
- activation d'au moins un frein de roue hydraulique (RB1, RB2, RB3, RB4) et/ou d'au moins un moteur de traction (TM).
